# EUROPEAN PATENT APPLICATION

(11) **EP 4 412 120 A1**
(43) Date of publication of application: **07.08.2024**
(21) Application number: 21958676.5
(22) Date of filing: 28.09.2021
(51) Int. Cl.: H04L 1/16, H04L 5/00

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: ZHANG, Yi, Dongguan, Guangdong 523860 (CN); XU, Jing, Dongguan, Guangdong 523860 (CN)
(74) Representative: Wu, Ting
(86) International application number: PCT/CN2021/121408
(87) International publication number: WO 2023/050081

(57) **Abstract**

A wireless communication method, a terminal device, and a network device are provided. The method includes the following. Receive a first physical downlink shared channel (PDSCH) set based on a transmission parameter for each PDSCH in the first PDSCH set, where at least one PDSCH in the first PDSCH set carries indication information, and the indication information is used for indicating at least one of: a transmission parameter for a first PDSCH carrying the indication information, or a transmission parameter for a second PDSCH that is subsequent to the first PDSCH in the first PDSCH set. By adopting the method provided in the disclosure, it is possible to avoid using DCI to schedule a transmission parameter for a PDSCH in the first PDSCH set, thereby reducing power consumption of a terminal in blind detection and improving reliability of service transmission while realizing multi-transport block (multi-TB) transmission.

## Description

### TECHNICAL FIELD

Embodiments of the disclosure relate to the field of communication, and more particularly, to a wireless communication method, a terminal device, and a network device.

### BACKGROUND

At present, in a new radio (NR) system, in order to support a larger subcarrier spacing (SCS), by increasing a physical downlink control channel (PDCCH) blind detection period, it is possible to support scheduling of multiple physical downlink shared channels (PDSCHs)/physical uplink shared channels (PUSCHs) with one downlink control information (DCI), i. e. multi-PDSCH/PUSCH scheduling with a single DCI. The multiple PDSCHs/PUSCHs each are used for carrying a different transport block (TB). If the multiple PDSCHs/PUSCHs are multiple PDSCHs, hybrid automatic repeat reQuest-acknowledgements (HARQ-ACKs) of the multiple PDSCHs are fed back on the same physical uplink control channel (PUCCH).

With aid of multi-PDSCH/PUSCH scheduling with a single DCI, it is possible not only to realize multi-TB transmission but also to take change of channel conditions into consideration, thereby improving transmission efficiency. However, it will also cause increase in PDCCH overhead and thus cause increase in power consumption of a terminal in blind detection, which is unfriendly to a lightweight/head-mounted/passive device. On the other hand, if scheduling information for multiple PDSCHs/PUSCHs is indicated by one DCI, the size of the DCI will increase accordingly, and as a result, reliability of the DCI will degrade with increase in payload size, thus degrading reliability of service transmission.

### SUMMARY

Embodiments of the disclosure provide a wireless communication method, a terminal device, and a network device, which can reduce power consumption of a terminal in blind detection and improve reliability of service transmission while realizing multi-transport block (multi-TB) transmission.

In a first aspect, a wireless communication method is provided in the disclosure. The method includes the following. Receive a first physical downlink shared channel (PDSCH) set based on a transmission parameter for each PDSCH in the first PDSCH set, where at least one PDSCH in the first PDSCH set carries indication information, and the indication information is used for indicating at least one of: a transmission parameter for a first PDSCH carrying the indication information, or a transmission parameter for a second PDSCH that is subsequent to the first PDSCH in the first PDSCH set.

In a second aspect, a wireless communication method is provided in the disclosure. The method includes the following. Obtain a hybrid automatic repeat reQuest (HARQ) process identity (ID) for each PDSCH in a first PDSCH set, where the first PDSCH set includes a semi-persistent scheduling (SPS) PDSCH in an SPS period, or the first PDSCH set includes a PDSCH scheduled by downlink control information (DCI). Receive the first PDSCH set based on the HARQ process ID for each PDSCH.

In a third aspect, a wireless communication method is provided in the disclosure. The method includes the following. Send a first PDSCH set based on a transmission parameter for each PDSCH in the first PDSCH set, where at least one PDSCH in the first PDSCH set carries indication information, and the indication information is used for indicating at least one of: a transmission parameter for a first PDSCH carrying the indication information, or a transmission parameter for a second PDSCH that is subsequent to the first PDSCH in the first PDSCH set.

In a fourth aspect, a wireless communication method is provided in the disclosure. The method includes the following. Obtain a HARQ process ID for each PDSCH in a first PDSCH set, where the first PDSCH set includes an SPS PDSCH in an SPS period, or the first PDSCH set includes a PDSCH scheduled by DCI. Send the first PDSCH set based on the HARQ process ID for each PDSCH.

In a fifth aspect, a terminal device is provided in the disclosure. The terminal device is configured to perform the method in any one of the first aspect and the second aspect or in various implementations of the first aspect and the second aspect. Specifically, the terminal device includes functional modules configured to perform the method in any one of the first aspect and the second aspect or in various implementations of the first aspect and the second aspect.

In an implementation, the terminal device may include a processing unit. The processing unit is configured to implement functions related to information processing. For example, the processing unit may be a processor.

In an implementation, the terminal device may include a sending unit and/or a receiving unit. The sending unit is configured to implement functions related to transmission, and the receiving unit is configured to implement functions related to reception. For example, the sending unit may be a transmitter, and the receiving unit may be a receiver. For another example, the terminal device is a communication chip, where the sending unit may be an input circuit or interface of the communication chip, and the sending unit may be an output circuit or interface of the communication chip.

In a sixth aspect, a network device is provided in the disclosure. The network device is configured to perform the method in any one of the third aspect and the fourth aspect or in various implementations of the third aspect and the fourth aspect. Specifically, the network device includes functional modules configured to perform the method in any one of the third aspect and the fourth aspect or in various implementations of the third aspect and the fourth aspect.

In an implementation, the network device may include a processing unit. The processing unit is configured to implement functions related to information processing. For example, the processing unit may be a processor.

In an implementation, the network device may include a sending unit and/or a receiving unit, where the sending unit is configured to implement functions related to transmission, and the receiving unit is configured to implement functions related to reception. For example, the sending unit may be a transmitter, and the receiving unit may be a receiver. For another example, the network device is a communication chip, where the receiving unit may be an input circuit or interface of the communication chip, and the sending unit may be an output circuit or interface of the communication chip.

In a seventh aspect, a terminal device is provided in the disclosure. The terminal device includes a processor and a memory. The memory is configured to store computer programs, and the processor is configured to invoke and execute the computer programs stored in the memory, to implement the method in any one of the first aspect and the second aspect or in various implementations of the first aspect and the second aspect.

In an implementation, the processor is one or more processors, and the memory is one or more memories.

In an implementation, the memory and the processor may be integrated together, or the memory may be disposed separately from the processor.

In an implementation, the terminal device further includes a transmitter and a receiver.

In an eighth aspect, a network device is provided in the disclosure. The network device includes a processor and a memory. The memory is configured to store computer programs, and the processor is configured to invoke and execute the computer programs stored in the memory, to implement the method in any one of the third aspect and the fourth aspect or various implementations of the third aspect and the fourth aspect.

In an implementation, the processor is one or more processors, and the memory is one or more memories.

In an implementation, the memory and the processor may be integrated together, or the memory may be disposed separately from the processor.

In an implementation, the network device further includes a transmitter and a receiver.

In a ninth aspect, a chip is provided in the disclosure. The chip is configured to implement the method in any one of the first aspect to the fourth aspect or in various implementations of the first aspect to the fourth aspect. Specifically, the chip includes a processor. The processor is configured to invoke and execute computer programs from a memory, to cause a device equipped with the chip to perform the method in any one of the first aspect to the fourth aspect or various implementations of the first aspect to the fourth aspect.

In a tenth aspect, a computer-readable storage medium is provided in the disclosure. The computer-readable storage medium is configured to store computer programs which are operable with a computer to perform the method in any one of the first aspect to the fourth aspect or various implementations of the first aspect to the fourth aspect.

In an eleventh aspect, a computer program product is provided in the disclosure. The computer program product includes computer program instructions which are operable with a computer to perform the method in any one of the first aspect to the fourth aspect or various implementations of the first aspect to the fourth aspect.

In a twelfth aspect, a computer program is provided in the disclosure The computer program, when executed by a computer, is operable with the computer to perform the method in any one of the first aspect to the fourth aspect or various implementations of the first aspect to the fourth aspect.

Based on the above technical solution, at least one PDSCH in the first PDSCH set is designed to carry the indication information, and the indication information is designed to indicate a transmission parameter for a PDSCH (i. e. the first PDSCH) carrying the indication information and/or indicate a transmission parameter for a PDSCH (i. e. the second PDSCH) that is subsequent to the first PDSCH in the first PDSCH set, that is, a transmission parameter for a PDSCH in the first PDSCH set is indicated by at least one PDSCH in the first PDSCH set. As such, it is possible to avoid using DCI to indicate a transmission parameter for a PDSCH in the first PDSCH set, thereby reducing power consumption of a terminal in blind detection, reducing DCI overhead, and improving transmission efficiency while realizing multi-TB transmission.

### BRIEF DESCRIPTION OF THE DRAWINGS

FIG. 1 illustrates an example of a system framework provided in embodiments of the disclosure.
FIG. 2 illustrates an example of hybrid automatic repeat reQuest (HARQ) process identities (IDs) used by semi-persistent scheduling (SPS) physical downlink shared channels (PDSCHs) in at least one SPS period starting from system frame number (SFN) = 0 provided in embodiments of the disclosure.
FIG. 3 is a schematic flowchart of a wireless communication method provided in embodiments of the disclosure.
FIG. 4 to FIG. 9 each are a schematic diagram illustrating indication information being used for indicating a transmission parameter for a first PDSCH and/or used for indicating a transmission parameter for a second PDSCH that is subsequent to the first PDSCH in a first PDSCH set provided in embodiments of the disclosure.
FIG. 10 is another schematic flowchart of a wireless communication method provided in embodiments of the disclosure.
FIG. 11 is a schematic diagram illustrating indication information being used for indicating a HARQ process ID for each PDSCH in a first PDSCH set provided in embodiments of the disclosure.
FIG. 12 is a schematic diagram illustrating obtaining HARQ process IDs for other PDSCHs in a first PDSCH set based on a HARQ process ID for a 1^{st} PDSCH in the first PDSCH set provided in embodiments of the disclosure.
FIG. 13 and FIG. 14 each are a schematic block diagram of a terminal device provided in embodiments of the disclosure.
FIG. 15 and FIG. 16 each are a schematic block diagram of a network device provided in embodiments of the disclosure.
FIG. 17 is a schematic block diagram of a communication device provided in embodiments of the disclosure.
FIG. 18 is a schematic block diagram of a chip provided in embodiments of the disclosure.

### DETAILED DESCRIPTION

The following will describe technical solutions of embodiments of the disclosure with reference to the accompanying drawings in embodiments of the disclosure. Apparently, embodiments described herein are some embodiments, rather than all embodiments, of the disclosure. Based on the embodiments of the disclosure, all other embodiments obtained by those of ordinary skill in the art without creative effort shall fall within the protection scope of the disclosure.

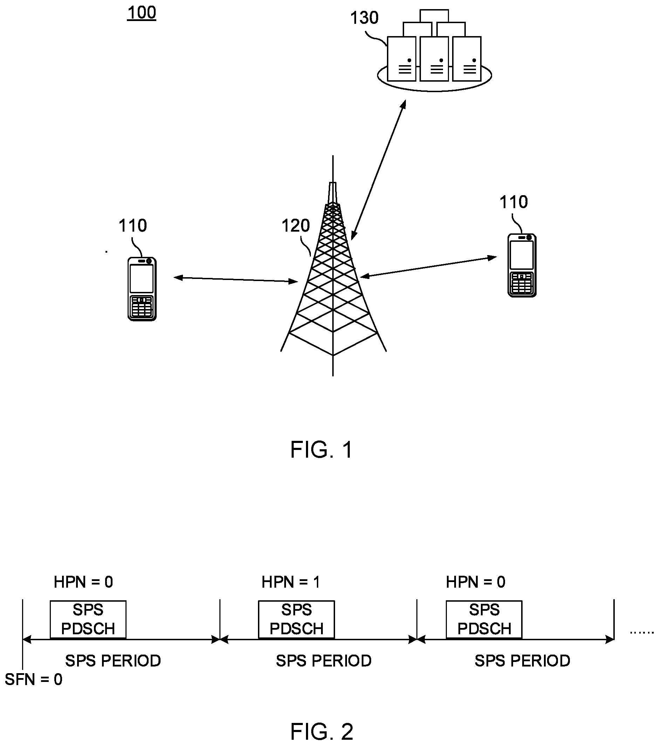

FIG. 1 illustrates an example of a system framework according to embodiments of the disclosure.

As illustrated in FIG. 1, the communication system 100 may include a terminal device 110 and a network device 120. The network device 120 may communicate with the terminal device 110 over an air interface. The terminal device 110 and the network device 120 support multi-service transmission.

It should be understood that, the embodiments of the disclosure merely take the communication system 100 as an example for illustration, but the embodiments of the disclosure are not limited thereto. That is, the technical solutions of the embodiments of the disclosure can be applied to various communication systems, for example, a long-term evolution (LTE) system, LTE time division duplex (TDD), a universal mobile telecommunication system (UMTS), an Internet of things (IoT) system, a narrow band IoT (NB-IoT) system, an enhanced machine-type communication (eMTC) system, a 5^{th} generation (5G) communication system (also referred to as a new radio (NR) communication system), or a future communication system, etc.

In the communication system 100 illustrated in FIG. 1, the network device 120 may be an access-network device for communicating with the terminal device 110. The access-network device can provide communication coverage for a specific geographic area, and can communicate with the terminal device(s) 110 (e. g., user equipment (UE)) within the coverage area.

The network device 120 may be an evolutional Node B (eNB or eNodeB) in an LTE system, or a next generation radio access network (NG RAN) device, or a base station (gNB) in an NR system, or a radio controller in a cloud radio access network (CRAN), or the network device 120 may be a relay station, an access point, an in-vehicle device, a wearable device, a hub, a switch, a bridge, or a router, or a network device in a future evolved public land mobile network (PLMN), etc.

The terminal device 110 may be any terminal device, and includes, but is not limited to, a terminal device that is configured to be connected with the network device 120 or other terminal devices in a wired or wireless manner.

For example, the terminal device 110 may refer to an access terminal, a UE, a subscriber unit, a subscriber station, a mobile station, a remote station, a remote terminal, a mobile device, a user terminal, a terminal, a wireless communication device, a user agent, or a user device. The access terminal may be a cellular telephone, a cordless telephone, a session initiation protocol (SIP) telephone, an IoT device, a satellite handheld terminal, a wireless local loop (WLL) station, a personal digital assistant (PDA), various devices with wireless communication functions such as a handheld device, a computing device, or other processing devices connected to a wireless modem, an in-vehicle device, a wearable device, a terminal device in a 5G network, or a terminal device in a future evolved network, etc.

The terminal devices 110 may communicate with each other through device-to-device (D2D) communication.

The wireless communication system 100 may further include a core-network device 130 for communicating with a base station. The core-network device 130 may be a 5G core (5GC) device, for example, an access and mobility management function (AMF), for another example, an authentication server function (AUSF), for another example, a user plane function (UPF), for another example, a session management function (SMF). Optionally, the core-network device 130 may also be an evolved packet core (EPC) device of an LTE network, for example, an SMF + core packet gateway (SMF + PGW-C) device. It should be understood that, the SMF + PGW-C may implement functions that can be implemented by each of an SMF and a PGW-C. With evolution of networks, the foregoing core-network device may also be called in other names, or a new network entity (entities) may be formed through division of functions of a core network, and embodiments of the disclosure are not limited in this regard.

Various functional units in the communication system 100 may also establish connections over NG interfaces in order to realize communication.

For example, the terminal device establishes an air-interface connection with the access-network device over an NR interface, in order for transmission of user-plane data and control-plane signaling. The terminal device may establish a control-plane signaling connection with the AMF over NG interface 1 (referred to as "N1" for short). The access-network device, such as a gNB, may establish a user-plane data connection with the UPF over NG interface 3 (referred to as "N3" for short). The access-network device may establish a control-plane signaling connection with the AMF over NG interface 2 (referred to as "N2" for short). The UPF may establish a control-plane signaling connection with the SMF over NG interface 4 (referred to as "N4" for short). The UPF may exchange user-plane data with a data network over NG interface 6 (referred to as "N6" for short). The AMF may establish a control-plane signaling connection with the SMF over NG interface 11 (referred to as "N11" for short). The SMF may establish a control-plane signaling connection with a policy control function (PCF) over NG interface 7 (referred to as "N7" for short).

FIG. 1 exemplarily illustrates one base station, one core-network device, and two terminal devices. Optionally, the wireless communication system 100 may include multiple base stations, and there may be other quantities of terminal devices in a coverage area of each of the multiple base stations, and embodiments of the disclosure are not limited in this regard.

It should be understood that, in embodiments of the disclosure, a device with communication functions in a network/system can be referred to as a "communication device". Taking the communication system 100 illustrated in FIG. 1 as an example, the communication device may include the network device 120 and the terminal device(s) 110 that have communication functions. The network device 120 and the terminal device(s) 110 can be the devices described above and will not be elaborated again herein. The communication device may further include other devices such as a network controller, a mobility management entity, or other network entities in the communication system 100, and embodiments of the disclosure are not limited in this regard.

It should be understood that, the terms "system" and "network" herein are usually used interchangeably throughout this disclosure. The term "and/or" herein only describes an association between associated objects, which means that there can be three relationships. For example, *A* and/or *B* can mean *A* alone, both *A* and *B* exist, and *B* alone. In addition, the character "/" herein generally indicates that the associated objects are in an "or" relationship.

It should be noted that, the disclosure is applicable to any service in which transmission is multi-transport block (multi-TB) transmission.

For example, the disclosure is applicable to services such as augmented reality (AR), virtual reality (VR), cloud game (CG), etc. A main extended reality (XR)/CG service is a video stream service, which has service requirements of low delay, high reliability, and high data rate. Taking 30 megabits per second (Mbps) data rate required by AR/VR as an example, the size of each video frame may be up to 62500 bytes on average. If 30 kilohertz (kHz) subcarrier spacing (SCS), 100 megahertz (MHz) bandwidth, 16 quadrature amplitude modulation (QAM) modulation order, and 1/3 code rate are used for transmission, nearly 10 slots are needed to complete transmission of one video frame, that is, after each video frame arrives quasi-periodically, since the frame size is too large, the video frame needs to be split into multiple TBs for transmission.

In order to facilitate understanding of solutions of the disclosure, semi-persistent scheduling (SPS) scheduling will be described below.

SPS may mean that a transmission resource is periodically configured for a terminal by radio resource control (RRC); after the transmission resource is activated by downlink control information (DCI), the terminal can periodically receive data on the configured resource, and DCI scheduling is no longer needed. SPS is introduced mainly in order to save DCI resources and reduce physical downlink control channel (PDCCH) overhead. Each bandwidth part (BWP) can be simultaneously configured with multiple active SPS physical downlink shared channel (PDSCH) resources by RRC signaling, and a configuration parameter includes, but is not limited to: a configured scheduling radio network temporary identity (CS-RNTI), which is an RNTI for scrambling a cyclic redundancy check (CRC) of an activation DCI; periodicity; the number of hybrid automatic repeat reQuest (HARQ) processes (*nrofHARQ-Processes*); and a HARQ process offset (*harq-ProcID-Offset*), etc.

After the terminal device is configured with an SPS configuration, the configured SPS will take effect only after activation by DCI. A CRC of the DCI is scrambled by a CS-RNTI configured. In order to improve reliability of the activation DCI, a specified indicator field is required to be set to specified information as an additional judgment condition. For example, if the terminal device is configured with only one SPS configuration, the specified indicator field is a HARQ process identity (ID) indicator field and a redundancy version (RV) indicator field, and the terminal device will consider the DCI as a valid activation DCI only if the two indicator fields are both set to "0".

In addition, the activation DCI contains a transmission parameter corresponding to an SPS PDSCH, such as a time domain resource allocation (TDRA) indication, a frequency domain resource allocation (FDRA) indication, a modulation and coding scheme (MCS), and a multiple input multiple output (MIMO)-related indicator field such as an antenna port(s), a transmission configuration indication (TCI), etc.

After activation by DCI, a slot in which a periodic (*N*^{th}) SPS PDSCH resource occurs is: (*numberOfSlotsPerFrame* × *SFN* + *st*) = [(*numberOfSlotsPerFrame* × *SFN_{start time} + slot_{start time}*) + *N* × *periodicity* × *numberOfSlotsPerFrame* / 10] *mod* (1024 × *numberOfSlotsPerFrame)*

*SFN_{start time}* and *slot_{start time}* are a system frame number (i. e. index of system frame) and a slot index (also referred to as "slot number"), respectively, for a 1^{st} SPS PDSCH after activation of SPS. That is, a slot (including a symbol, a frequency domain resource, etc.) in which the 1^{st} SPS PDSCH occurs is indicated by the activation DCI, and a slot for a subsequent SPS PDSCH that periodically occurs is obtained based on the foregoing formula and the configuration parameter (periodicity). It should be noted that, only one TB can be transmitted on each periodic SPS PDSCH resource.

Since a HARQ process ID in the activation DCI is configured as a special indicator field for determining whether the activation DCI is valid, other manners are needed to obtain a HARQ process ID for a periodic SPS PDSCH.

Specifically, the HARQ process ID for each periodic SPS PDSCH can be determined in the following manner:

For an SPS not configured with a HARQ process offset, a HARQ process for each SPS PDSCH is obtained according to the following formula: HARQID = [floor (sc × 10 / (numberOfSlotsPerFrame × p))] mod nrofHARQ- Processes

*HARQ_{ID}* represents a HARQ process ID for a PDSCH, *s_{c}* = [(*SFN* × *numberOfSlotsPerFrame)* + *sf], SFN* represents an index of a system frame in which a 1^{st} PDSCH is located, *nrofHARQ-Processes* represents the number of configured HARQ processes, p represents an SPS period corresponding to a first PDSCH set, *numberOfSlotsPerFrame* represents the number of slots in each system frame, *s_{f}* represents an index of a slot in which the 1^{st} PDSCH is located in the system frame, *floor* represents a floor operation, and *mod* represents a modulo operation.

That is, process IDs for SPS PDSCHs are set based on the periodicity, and are cycled from 0 to *nrofHARQ-Processes-1.*

For an SPS configured with a HARQ process offset, a HARQ process for each SPS PDSCH is obtained according to the following formula: HARQID = [floor (sc × 10 / (numberOfSlotsPerFrame × p))] mod nrofHARQ- Processes + harq-ProcID-Offset

*HARQ_{ID}* represents a HARQ process ID for a 1^{st} PDSCH, *s_{c}* = [(*SFN* × *numberOfSlotsPerFrame*) + *s_{f}*], *SFN* represents an index of a system frame in which the 1^{st} PDSCH is located, *nrofHARQ-Processes* represents the number of HARQ processes, p represents an SPS period corresponding to a first PDSCH set, *numberOfSlotsPerFrame* represents the number of slots in each system frame, sf represents an index of a slot in which the 1^{st} PDSCH is located in the system frame, *harq-ProcID-Offset* represents a HARQ process offset, *floor* represents a floor operation, and *mod* represents a modulo operation.

FIG. 2 illustrates an example of HARQ process IDs used by SPS PDSCHs in at least one SPS period starting from SFN = 0 provided in embodiments of the disclosure.

As illustrated in FIG. 2, assuming that nrofHARQ-Processes = 2 and there is no SPS configured with a HARQ process offset, a HARQ process ID for an SPS PDSCH in a 1^{st} SPS period starting from *SFN* = 0 is 0, a HARQ process ID for an SPS PDSCH in a 2^{nd} SPS period is 1, a HARQ process ID for an SPS PDSCH in a 3^{rd} SPS period is 0, and so forth. These numerical values are obtained by performing a modulo operation on *nrofHARQ-Processes* with the formula corresponding to the SPS not configured with a HARQ process offset when *nrofHARQ-Processes* = 2.

Similarly, for an SPS configured with a HARQ process offset, the formula corresponding thereto is similar to the formula corresponding to the SPS not configured with a HARQ process offset, and the only difference is that an offset value is added to the HARQ process ID that is obtained according to the formula corresponding to the SPS not configured with a HARQ process offset. With reference to FIG. 2, assuming *harq-ProcID-Offset* = 2, the HARQ process ID corresponding to the SPS PDSCH in the 1^{st} SPS period starting from SFN = 0 in FIG. 2 changes to 0+2=2, the HARQ process ID for the SPS PDSCH in the 2^{nd} SPS period changes to 1+2=3, and the HARQ process ID for the SPS PDSCH in the 3^{rd} SPS period changes to 0+2=2, and so forth.

As can be seen, SPS scheduling is suitable for a periodic service, which is possible to save PDCCH resources and on the other hand, reduce power consumption of a UE in PDCCH monitoring. However, a PDSCH resource scheduled through SPS in each SPS period only supports transmission of one TB, and does not support multi-TB transmission. In addition, for SPS scheduling, SPS PDSCHs in different periods use the same information such as time-frequency resource, MCS, antenna port, TCI, etc. Since all the scheduling information is indicated by an activation DCI, the scheduling information will not change. For wireless transmission, however, channel conditions change constantly over time, and if SPS scheduling is adopted, although PDCCH resources can be saved and power consumption of the terminal can be reduced, transmission efficiency will be degraded accordingly and a system capacity will be affected.

In order to facilitate understanding of solutions of the disclosure, multi-TB transmission will be described below.

In order to support a larger SCS, by increasing a PDCCH blind detection period, it is possible to support scheduling of multiple PDSCHs/physical uplink shared channels (PUSCHs) with one DCI, i. e. multi-PDSCH/PUSCH scheduling with a single DCI. The multiple PDSCHs/PUSCHs each are used for carrying a different TB transmission. If the multiple PDSCHs/PUSCHs are multiple PDSCHs, HARQ-acknowledgements (HARQ-ACKs) of the multiple PDSCHs are fed back on the same physical uplink control channel (PUCCH).

Specifically, some indicator fields (such as MCS) in DCI are shared by all PDSCHs, while other indicator fields, such as RV or new data indicator (NDI), are set per PDSCH/PUSCH. For a time-domain resource indication, a multi-PUSCH function in NR-unlicensed (NR-U) is used to extend a TDRA, that is, each row can indicate a start and length indicator value (SLIV), a mapping type, and a slot offset for more than one PDSCH/PUSCH. A HARQ process number (HPN, also referred to as "HARQ process ID") indicated by DCI is applicable to a 1^{st} scheduled PDSCH, and HPNs for other PDSCHs are added by 1 sequentially in order.

As can be seen, with aid of multi-PDSCH/PUSCH scheduling with a single DCI, it is possible not only to realize multi-TB transmission but also to take change of channel conditions into consideration, thereby improving transmission efficiency. However, it will also cause increase in PDCCH overhead and thus cause increase in power consumption of the terminal in blind detection, which is unfriendly to a lightweight/head-mounted/passive device. On the other hand, if scheduling information for multiple PDSCHs/PUSCHs is indicated by one DCI, the size of the DCI will increase accordingly, and as a result, reliability of the DCI will degrade with increase in payload size, thus degrading reliability of service transmission.

As can be seen from the foregoing analysis, if SPS is adopted, multi-TB transmission cannot be realized. With regard to multi-PDSCH/PUSCH scheduling with a single DCI, although multi-PDSCH/PUSCH scheduling with a single DCI can be realized, power consumption of the terminal in blind detection will increase and reliability of service transmission will be degraded. To this end, the disclosure provides a wireless communication method, and as such, no matter for SPS or dynamic scheduling, it is possible to reduce power consumption of the terminal in blind detection and improve reliability of service transmission while realizing multi-TB transmission.

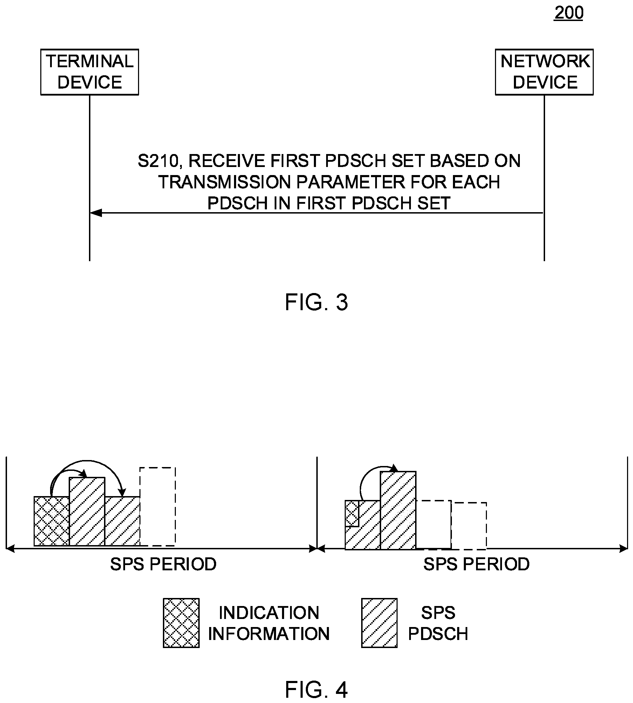

FIG. 3 is a schematic flowchart of a wireless communication method 200 according to embodiments of the disclosure. The method 200 may be implemented interactively by a terminal device and a network device. The terminal device illustrated in FIG. 3 may be the terminal device illustrated in FIG. 1, and the network device illustrated in FIG. 3 may be the access-network device illustrated in FIG. 1.

As illustrated in FIG. 3, the method 200 may include some or all of the following.

S210, a terminal device receives a first PDSCH set based on a transmission parameter for each PDSCH in the first PDSCH set.

At least one PDSCH in the first PDSCH set carries indication information, where the indication information is used for indicating at least one of: a transmission parameter for a first PDSCH carrying the indication information, or a transmission parameter for a second PDSCH(s) that is subsequent to the first PDSCH in the first PDSCH set.

In other words, some or all of PDSCHs in the first PDSCH resource set carry the indication information, where the indication information is used for indicating a transmission parameter for a PDSCH carrying the indication information and/or a subsequent PDSCH(s), and the PDSCH carrying the indication information and/or the subsequent PDSCH belongs to the first PDSCH resource set.

Correspondingly, the network device sends the first PDSCH set based on the transmission parameter for each PDSCH in the first PDSCH set, where at least one PDSCH in the first PDSCH set carries the indication information, and the indication information is used for indicating at least one of: the transmission parameter for the first PDSCH carrying the indication information, or the transmission parameter for the second PDSCH that is subsequent to the first PDSCH in the first PDSCH set.

In the embodiments, at least one PDSCH in the first PDSCH set is designed to carry the indication information, and the indication information is designed to indicate the transmission parameter for the first PDSCH and/or indicate the transmission parameter for the second PDSCH, that is, a transmission parameter for a PDSCH in the first PDSCH set is indicated by at least one PDSCH in the first PDSCH set. As such, it is possible to avoid using DCI to indicate a transmission parameter for a PDSCH in the first PDSCH set, thereby reducing power consumption of a UE in blind detection, reducing DCI overhead, and improving transmission efficiency while realizing multi-TB transmission.

It should be noted that, in the disclosure, the first PDSCH is a PDSCH on which the indication information is located, that is, the first PDSCH is any one PDSCH in the at least one PDSCH. The second PDSCH is any one PDSCH that is subsequent to the first PDSCH in the first PDSCH set. For example, the second PDSCH may be any PDSCH in the first PDSCH set that is subsequent to the first PDSCH and carries the indication information, or may be any one PDSCH in the first PDSCH set that is subsequent to the first PDSCH but does not carry the indication information.

It should be noted that, the term "indication" involved in embodiments of the disclosure may be a direct indication, may be an indirect indication, or may mean that there is an association. For example, *A* indicates *B* may mean that *A* directly indicates *B*, for instance, *B* can be obtained according to *A*; may mean that *A* indirectly indicates *B*, for instance, *A* indicates *C,* and *B* can be obtained according to *C*; or may mean that there is an association between *A* and *B.* In the disclosure, A is the indication information, and *C is* the transmission parameter for the first PDSCH and/or the transmission parameter for the second PDSCH.

In addition, there is no limitation on the implementation of the indication information in the disclosure.

For example, the indication information may be information in a data field in the at least one PDSCH. For another example, the indication information may be a field in the at least one PDSCH that can carry data.

Optionally, the indication information may indicate a transmission parameter for a PDSCH in a second PDSCH set. For example, the first PDSCH set may be a first SPS PDSCH set, and the second PDSCH set may include an SPS PDSCH(s) in an SPS period next to an SPS period in which the first SPS PDSCH set is located. Optionally, the transmission parameter for the PDSCH in the second PDSCH set includes, but is not limited to, a HARQ process ID. Optionally, the SPS PDSCH in the next SPS period includes a 1^{st} SPS PDSCH and/or other SPS PDSCHs in the next SPS period.

Optionally, the indication information may occupy some or all of resources for a PDSCH carrying the indication information.

In other words, the PDSCH carrying the indication information may be used only for transmitting the indication information, or may be used for transmitting both the indication information and data. That is, one PDSCH may be used to transmit both the indication information and data, or may be used for transmitting the indication information only.

In some embodiments, regarding the indication information carried on the last PDSCH among the at least one PDSCH, the indication information is used for indicating at least one of: the transmission parameter for the first PDSCH, or a transmission parameter for some or all of the second PDSCHs.

It should be noted that, the some or all of the second PDSCHs may include some or all of PDSCHs that are subsequent to the first PDSCH in the first PDSCH set, which may be, for example, some or all of PDSCHs in the first PDSCH set that are subsequent to the first PDSCH and do not carry the indication information.

In some embodiments, regarding the indication information carried on a PDSCH other than the last PDSCH among the at least one PDSCH, the indication information is used for indicating at least one of: the transmission parameter for the first PDSCH, or a transmission parameter for some or all of the second PDSCHs.

It should be noted that, the some or all of the second PDSCHs may include some or all of PDSCHs that are subsequent to the first PDSCH in the first PDSCH set, which may be, for example, some or all of PDSCHs in the first PDSCH set that are subsequent to the first PDSCH and carry the indication information, or may be some or all of PDSCHs in the first PDSCH set that are subsequent to the first PDSCH but do not carry the indication information.

Exemplarily, regarding the indication information carried on a PDSCH except the last PDSCH among the at least one PDSCH, the indication information is used for indicating at least one of: the transmission parameter for the first PDSCH, or a transmission parameter for some or all of the second PDSCHs that are prior to a third PDSCH, where the third PDSCH is a 1^{st} PDSCH that is subsequent to the first PDSCH among the at least one PDSCH.

In other words, the indication information is used for indicating at least one of: the transmission parameter for the first PDSCH, or a transmission parameter for some or all of PDSCHs that are prior to a next PDSCH carrying the indication information.

It should be noted that, the third PDSCH is the 1^{st} PDSCH that is subsequent to the first PDSCH among the at least one PDSCH, that is, the third PDSCH is the 1^{st} PDSCH carrying the indication information that is subsequent to the PDSCH on which the indication information is located. In other alternative embodiments, the third PDSCH may be an *n*^{th} PDSCH carrying the indication information that is subsequent to the PDSCH on which the indication information is located, where *n* is a positive integer. The disclosure is not limited in this regard.

In some embodiments, the transmission parameter includes at least one of: TDRA information, FDRA information, an MCS, an antenna port, a TCI, a HARQ process ID, an RV, or the number of PDSCHs in the first PDSCH set.

In some embodiments, the type of the transmission parameter for the first PDSCH is the same as or different from the type of the transmission parameter for the second PDSCH.

It should be noted that, in the disclosure, transmission parameters of the same type may refer to the same type of transmission parameters, and similarly, transmission parameters of different types may refer to different types of transmission parameters. For example, RV0 and RV1 are transmission parameters of the same type, and an RV and an MCS are transmission parameters of different types.

Optionally, the transmission parameter for the first PDSCH includes a HARQ process ID.

Optionally, the transmission parameter for the second PDSCH includes at least one of the following.

It should be noted that, the transmission parameter for the first PDSCH indicated by the indication information may be different from a transmission parameter for a subsequent PDSCH indicated by the indication information. For example, the transmission parameter for the first PDSCH indicated by the indication information includes a HARQ process ID, and the transmission parameter for the subsequent PDSCH indicated by the indication information may further include at least one of the following besides the HARQ process ID: a TDRA, an FDRA, an MCS, an antenna port, a TCI, etc. The reason is that the indication information is multiplexed on a current PDSCH, and a transmission parameter corresponding to the indication information is likely to be obtained according to a transmission parameter for the PDSCH carrying the indication information. That is, reception and demodulation of the indication information rely on the transmission parameter for the PDSCH carrying the indication information, and therefore, the indication information cannot be used to indicate a transmission parameter related to demodulation of the PDSCH carrying the indication information, but the HARQ process ID will make no difference to a demodulation procedure of the terminal. The transmission parameter corresponding to the indication information may also be independent of a transmission parameter for a PDSCH, and in this case, it is possible to indicate more transmission parameters for the PDSCH carrying the indication information, which is more flexible.

The number of PDSCHs in the first PDSCH set, the number of PDSCHs other than the first PDSCH in the first PDSCH set, TDRA information, FDRA information, an MCS, an antenna port, a TCI, a HARQ process ID, or an RV.

In some embodiments, at least one of some or all of the transmission parameters for the first PDSCH or some or all of the transmission parameters for the second PDSCH is configured or indicated by first signaling. For example, at least one of some or all of the transmission parameters for the first PDSCH or some or all of the transmission parameters for the second PDSCH is semi-statically configured or dynamically indicated by the first signaling.

In other words, the some or all of the transmission parameters may be configured or indicated for the first PDSCH set, that is, the some or all of the transmission parameters are shared among all the PDSCHs in the first PDSCH set. Optionally, the first signaling is carried in RRC signaling or DCI. For example, the DCI is a DCI for activating SPS corresponding to the first PDSCH set or a DCI for scheduling the first PDSCH set. It should be noted that, there is no limitation on the implementation of the first signaling in the disclosure. For example, the first signaling may be information in a field or data field in the RRC or DCI, or may be information in a newly added field.

Optionally, if all the transmission parameters for the first PDSCH and/or all the transmission parameters for the second PDSCH are configured or indicated by the first signaling, the indication information may be used for adjusting or modifying the transmission parameters configured or indicated by the first signaling.

In some implementations, at least one of some of the transmission parameters for the first PDSCH or some of the transmission parameters for the second PDSCH is configured or indicated by the first signaling, and the indication information is used for indicating the rest of the transmission parameters for the first PDSCH and/or the rest of the transmission parameters for the second PDSCH.

Optionally, the some or all of the transmission parameters include at least one of: TDRA information, FDRA information, an MCS, an antenna port, a TCI, or an RV.

Optionally, the rest of the transmission parameters include at least one of: a HARQ process ID, the number of PDSCHs in the first PDSCH set, the number of PDSCHs other than the first PDSCH in the first PDSCH set, a transmission parameter other than a first transmission parameter, or an MCS.

In the embodiments, on one hand, some of the transmission parameters are configured or indicated by the first signaling, that is, some of the transmission parameters are shared among all the PDSCHs in the first PDSCH set. For example, if some of the transmission parameters include a TDRA and an FDRA, it means that all the PDSCHs in the first PDSCH set occupy the same time-frequency resource(s), i. e. signaling overhead can be reduced by sharing some of the transmission parameters. On the other hand, the rest of the transmission parameters are indicated by the indication information, that is, the rest of the transmission parameters can be dynamically indicated with respect to channel changes, and as such, it is possible to improve reliability of transmission. For example, if the rest of the transmission parameters include an MCS, it means that different MCSs are scheduled for different PDSCHs in the first PDSCH set with respect to channel changes, that is, reliability of data transmission can be improved by dynamically indicating the rest of the transmission parameters. To summarize, in the embodiments, some of the transmission parameters are configured by the first signaling, while the rest of the transmission parameters are indicated by the indication information, which can not only save overhead of the indication information but also improve reliability of data transmission.

In some embodiments, a transmission parameter for the indication information or an adjustment amount of the transmission parameter for the indication information is predefined, or the transmission parameter for the indication information or the adjustment amount of the transmission parameter for the indication information is configured or indicated by second signaling.

It should be noted that, in embodiments of the disclosure, the "predefined" may be implemented by pre-storing a corresponding code or table in a device (for example, including the terminal device and the network device) or in other manners that can be used for indicating related information, and the disclosure is not limited in this regard. For example, the "predefined" may mean defined in a protocol. Optionally, the "protocol" may refer to a communication standard protocol, which may include, for example, an LTE protocol, an NR protocol, and a protocol applied to a future communication system, and the disclosure is not limited in this regard.

Optionally, the second signaling is carried in RRC signaling or DCI.

Exemplarily, the second signaling is carried in a DCI used for activating SPS corresponding to the first PDSCH set or a DCI used for scheduling the first PDSCH set.

It should be noted that, there is no limitation on the implementation of the second signaling in the disclosure. For example, the second signaling may be information in a field or data field in the RRC or DCI, or may be information in a newly added field.

Optionally, the adjustment amount of the transmission parameter for the indication information is an adjustment amount of the transmission parameter for the indication information relative to the transmission parameter for the first PDSCH, or the adjustment amount of the transmission parameter for the indication information is an adjustment amount of the transmission parameter for the indication information relative to a transmission parameter indicated by RRC or DCI. Exemplarily, the RRC or DCI may be the first signaling or the indication information.

Exemplarily, taking MCS as an example, an MCS for the indication information may be directly indicated, or may be indicated by indicating an adjustment amount of a modulation order and/or a code rate for the indication information relative to a modulation order and/or a code rate for the PDSCH carrying the indication information. For another example, a symbol occupied by the indication information in a slot in which the indication information is located may be directly indicated, or may be indicated by indicating that a symbol occupied by the indication information uses a demodulation reference signal (DMRS) symbol for the PDSCH carrying the indication information as a reference time.

Optionally, the transmission parameter for the indication information includes at least one of: a time-frequency resource occupied by the indication information, an MCS used by the indication information, an antenna port used by the indication information, or a TCI used by the indication information.

Exemplarily, the time-frequency resource occupied by the indication information may include a time-domain resource and a frequency-domain resource, where the time-domain resource may include a slot or a symbol, and the frequency-domain resource may include a resource block (RB), an RB set, a frequency band, or a spectrum range.

Optionally, different transmission parameters for the indication information are indicated in different manners or in the same manner.

Exemplarily, the transmission parameters for the indication information may be indicated in a mixed manner. For example, some of the transmission parameters may be configured by higher-layer signaling, and the rest of the transmission parameters may be indicated by one DCI.

In some embodiments, the first PDSCH set includes an SPS PDSCH in an SPS period, or the first PDSCH set includes a PDSCH scheduled by DCI.

In other words, the wireless communication method provided in embodiments of the disclosure can be applied to SPS, and can also be applied to dynamic scheduling. If it is applied to SPS, a resource corresponding to the first PDSCH set includes an SPS PDSCH resource in an SPS period, in other words, the resource corresponding to the first PDSCH set includes multiple SPS PDSCH resources configured or activated by DCI in an SPS period. For example, the resource corresponding to the first PDSCH set includes an SPS PDSCH resource configured or activated by DCI and an SPS PDSCH resource scheduled or activated by the indication information. Similarly, if it is applied to dynamic scheduling, the resource corresponding to the first PDSCH set includes a PDSCH resource scheduled by DCI. For example, the resource corresponding to the first PDSCH set includes a PDSCH resource scheduled by DCI and a PDSCH resource scheduled by the indication information.

In some embodiments, the first PDSCH set is used for transmitting different TBs.

Exemplarily, for SPS, an SPS period has multiple SPS PDSCH resources, and the multiple SPS PDSCH resources are used for transmitting multiple TBs respectively. For dynamic scheduling, one DCI is used for scheduling multiple PDSCH resources, and the multiple PDSCH resources are used for transmitting multiple TBs respectively.

It should be noted that, the multiple PDSCHs may also be used for transmitting the same TB, and the disclosure is not limited in this regard.

For example, if the resource corresponding to the first PDSCH set includes an SPS PDSCH resource in an SPS period, it means that multiple SPS PDSCHs can be used for transmitting the same TB, and the first PDSCH set refers to a set of multiple SPS PDSCHs for transmitting the same TB, thereby realizing SPS-based PDSCH repetitions.

The method 200 will be elaborated below with reference to some embodiments.

### Embodiment 1:

In this embodiment, the indication information is used for indicating the transmission parameter for the second PDSCH that is subsequent to the first PDSCH carrying the indication information in the first PDSCH set, where the resource corresponding to the first PDSCH set includes an SPS PDSCH resource in an SPS period.

Optionally, the first signaling is carried in RRC signaling or DCI.

FIG. 4 is a schematic diagram illustrating a case where the indication information is used for indicating transmission parameters for other PDSCHs in an SPS period provided in embodiments of the disclosure.

As illustrated in FIG. 4, a base station indicates a transmission parameter, such as TDRA information, FDRA information, an MCS, an antenna port, a TCI, etc., for a 1^{st} SPS PDSCH resource in each SPS period by an activation DCI. In addition, the 1^{st} SPS PDSCH resource carries the indication information, where the indication information is used for indicating transmission parameters for other PDSCHs in the SPS period, such as the number of (remaining) PDSCHs transmitted in the SPS period, a TDRA(s), an FDRA(s), an MCS(s), an antenna port(s), a TCI(s), a HARQ process ID(s), etc. for subsequent PDSCHs in the SPS period.

Since a transmission parameter for a subsequent SPS PDSCH(s) is dynamically indicated completely by the 1^{st} SPS PDSCH, it is beneficial to indicating flexibly the transmission parameter for the subsequent SPS PDSCH regarding multi-user scheduling and the channel condition in each slot, thereby improving reliability of data transmission.

### Embodiment 2:

In this embodiment, some of the transmission parameters for the first PDSCH and some of the transmission parameters for the second PDSCH are configured or indicated by the first signaling, and the indication information is used for indicating the rest of the transmission parameters for the first PDSCH and the rest of the transmission parameters for the second PDSCH. The resource corresponding to the first PDSCH set includes an SPS PDSCH resource in an SPS period.

Optionally, the some of the transmission parameters include at least one of: a TDRA, an FDRA, an MCS, an antenna port, a TCI, or an RV.

Optionally, the rest of the transmission parameters include at least one of: a HARQ process ID, the number of PDSCHs in the first PDSCH set, the number of PDSCHs other than the first PDSCH in the first PDSCH set, a transmission parameter other than a first transmission parameter, or an MCS.

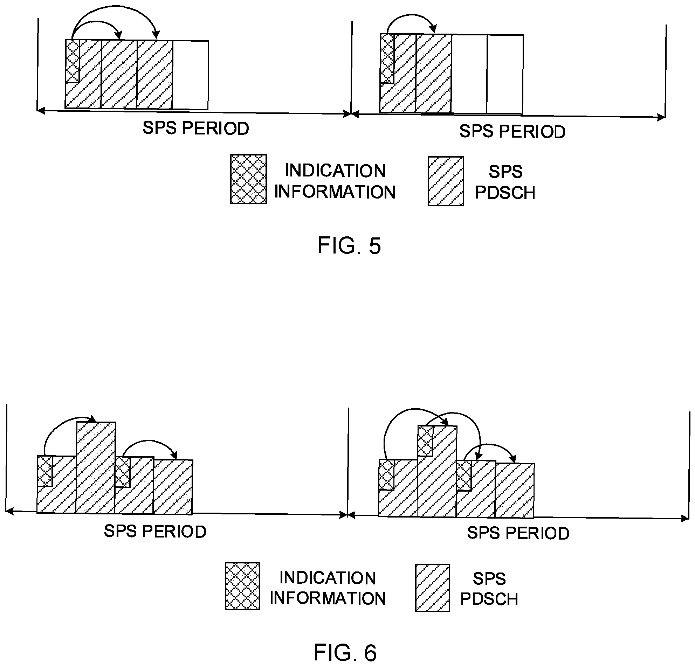

FIG. 5 is a schematic diagram illustrating a case where some of transmission parameters are configured by the first signaling and the rest of transmission parameters are indicated by the indication information provided in embodiments of the disclosure.

As illustrated in FIG. 5, a base station may configure some of the transmission parameters by RRC signaling or indicate some of the transmission parameters by an activation DCI. For example, if the some of the transmission parameters include a TDRA and an FDRA, it means that all the PDSCHs in the first PDSCH set occupy the same time-frequency resource(s). In addition, the base station may also indicate the rest of transmission parameters for a 1^{st} SPS PDSCH resource in each SPS period by the activation DCI, and on the other hand, the 1^{st} SPS PDSCH resource in each SPS period carries the indication information, where the indication information is used for indicating the rest of transmission parameters for other SPS PDSCHs in the SPS period.

In this embodiment, on one hand, some of the transmission parameters are configured or indicated by the first signaling, that is, some of the transmission parameters are shared among all the PDSCHs in the first PDSCH set. For example, if some of the transmission parameters include a TDRA and an FDRA, it means that all the PDSCHs in the first PDSCH set occupy the same time-frequency resource(s), i. e. signaling overhead can be reduced by sharing some of the transmission parameters. On the other hand, the rest of the transmission parameters are indicated by the indication information, that is, the rest of the transmission parameters can be dynamically indicated with respect to channel changes, and as such, it is possible to improve reliability of transmission. For example, if the rest of the transmission parameters include an MCS, it means that different MCSs are scheduled for different PDSCHs in the first PDSCH set with respect to channel changes, that is, it is possible to improve reliability of data transmission by dynamically indicating the rest of the transmission parameters. To summarize, in this embodiment, some of the transmission parameters are configured by the first signaling, and the rest of the transmission parameters are indicated by the indication information, which can not only save overhead of the indication information but also improve reliability of data transmission.

FIG. 4 and FIG. 5 are merely examples of the disclosure, and shall not be construed as limitation to the disclosure.

For example, in other alternative embodiments, the indication information may be carried on multiple SPS PDSCHs or an SPS PDSCH other than the 1^{st} SPS PDSCH in an SPS period.

FIG. 6 is a schematic diagram illustrating a case where the indication information is carried on multiple SPS PDSCHs in an SPS period provided in embodiments of the disclosure.

As illustrated in the left of FIG. 6, the indication information in an *n*^{th} PDSCH is used for indicating a transmission parameter(s) for a PDSCH(s) that is subsequent to the *n*^{th} PDSCH and prior to a next PDSCH carrying the indication information. Alternatively, as illustrated in the right of FIG. 6, the indication information in the *n*^{th} PDSCH is used for indicating a transmission parameter for an (*n*+1)^{th} PDSCH.

### Embodiment 3:

In this embodiment, DCI is used for scheduling the first PDSCH. All resources for the 1^{st} PDSCH are used for carrying the indication information, where the indication information is used for indicating all transmission parameters for the second PDSCH that is subsequent to the first PDSCH carrying the indication information. The 1^{st} PDSCH and a PDSCH scheduled by the indication information belong to the first PDSCH set.

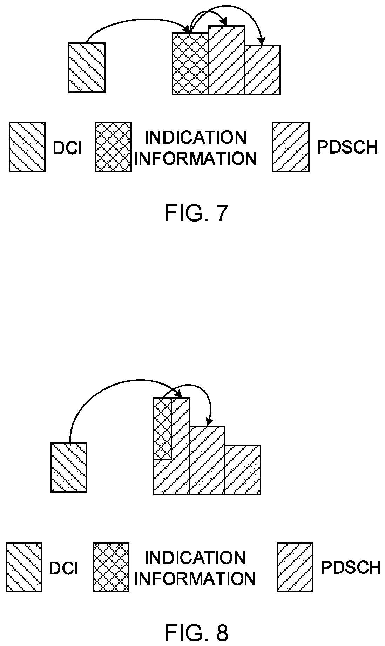

FIG. 7 is a schematic diagram illustrating a case where the indication information is used for indicating transmission parameters for other PDSCHs in an SPS period provided in embodiments of the disclosure.

As illustrated in FIG. 7, a base station schedules a transmission parameter, such as TDRA information, FDRA information, an MCS, an antenna port, a TCI, etc., for a 1^{st} SPS PDSCH resource by DCI, where all resources for the 1^{st} PDSCH are used for carrying the indication information, and the indication information is used for indicating a transmission parameter for a PDSCH that is subsequent to the 1^{st} PDSCH. For example, the indication information is used for indicating at least one of the following for the PDSCH that is subsequent to the 1^{st} PDSCH: a TDRA, an FDRA, an MCS, an antenna port, a TCI, or an RV.

### Embodiment 4:

In this embodiment, DCI is used for scheduling the first PDSCH. Some of resources for the 1^{st} PDSCH are used for carrying the indication information, where the indication information is used for indicating all transmission parameters for a PDSCH that is subsequent to the PDSCH carrying the indication information. The 1^{st} PDSCH and a PDSCH scheduled by the indication information belong to the first PDSCH set.

FIG. 8 is another schematic diagram illustrating a case where the indication information is used for indicating transmission parameters for other PDSCHs in an SPS period provided in embodiments of the disclosure.

As illustrated in FIG. 8, a base station schedules a transmission parameter for a 1^{st} SPS PDSCH resource by DCI, such as TDRA information, FDRA information, an MCS, an antenna port, a TCI, etc. Part of resources for the 1^{st} PDSCH are used for carrying the indication information, where the indication information is used for indicating a transmission parameter for a PDSCH that is subsequent to the 1^{st} PDSCH. For example, the indication information is used for indicating at least one of the following for the PDSCH that is subsequent to the 1^{st} PDSCH: a TDRA, an FDRA, an MCS, an antenna port, a TCI, or an RV.

FIG. 7 and FIG. 8 are merely examples of the disclosure, and shall not be construed as limitation to the disclosure.

For example, in other alternative embodiments, the indication information may be carried on a PDSCH other than the 1^{st} PDSCH.

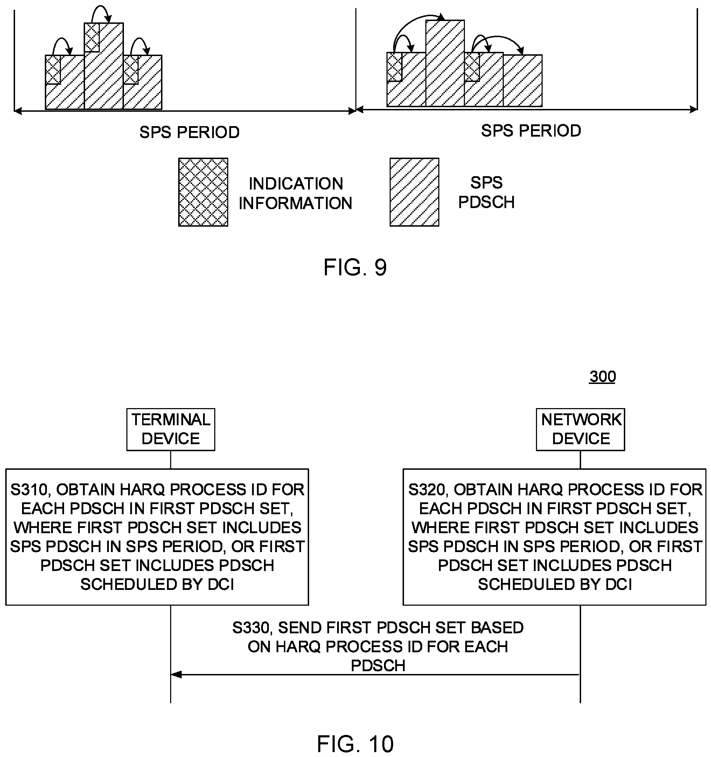

FIG. 10 is a schematic flowchart of a wireless communication method 300 according to embodiments of the disclosure. The method 300 may be executed interactively by a terminal device and a network device. The terminal device illustrated in FIG. 10 may be the terminal device illustrated in FIG. 1, and the network device illustrated in FIG. 10 may be the access-network device illustrated in FIG. 1.

### Embodiment 5:

In this embodiment, the indication information is used for indicating the transmission parameter for the first PDSCH, or the indication information is used for indicating the transmission parameter for the first PDSCH and indicating the transmission parameter for the second PDSCH.

FIG. 9 is a schematic diagram illustrating the purpose of the indication information provided in embodiments of the disclosure.

As illustrated in the left of FIG. 9, in an SPS period, the indication information indicates only the transmission parameter for the first PDSCH. As illustrated in the right of FIG. 9, in an SPS period, the indication information indicates both a transmission parameter for a current PDSCH and a transmission parameter for a subsequent PDSCH.

It should be noted that, the transmission parameter for the first PDSCH indicated by the indication information may be different from a transmission parameter for a subsequent PDSCH indicated by the indication information. For example, the transmission parameter for the first PDSCH indicated by the indication information includes a HARQ process ID, and the transmission parameter for the subsequent PDSCH indicated by the indication information may further include at least one of the following besides the HARQ process ID: a TDRA, an FDRA, an MCS, an antenna port, a TCI, etc. The reason is that the indication information is multiplexed on the current PDSCH, and a transmission parameter corresponding to the indication information is likely to be obtained according to the transmission parameter for the PDSCH carrying the indication information. That is, reception and demodulation of the indication information rely on the transmission parameter for the PDSCH carrying the indication information, and therefore, the indication information cannot be used to indicate a transmission parameter related to demodulation of the PDSCH carrying the indication information, but the HARQ process ID will make no difference to a demodulation procedure of the terminal. The transmission parameter corresponding to the indication information may also be independent of a transmission parameter for a PDSCH, and in this case, it is possible to indicate more transmission parameters for the PDSCH carrying the indication information, which is more flexible.

As illustrated in FIG. 10, the method 300 may include some or all of the following.

S310, obtain a HARQ process ID for each PDSCH in a first PDSCH set, where the first PDSCH set includes an SPS PDSCH in an SPS period, or the first PDSCH set includes a PDSCH scheduled by DCI.

S330, receive the first PDSCH set based on the HARQ process ID for each PDSCH.

For example, based on a HARQ process ID, the terminal device receives a PDSCH carrying the HARQ process ID.

In some embodiments, at least one PDSCH in the first PDSCH set carries indication information, and the indication information is used for indicating at least one of: a transmission parameter for a first PDSCH carrying the indication information, or a transmission parameter for a second PDSCH that is subsequent to the first PDSCH in the first PDSCH set.

It should be noted that, the term "indication" involved in embodiments of the disclosure may be a direct indication, may be an indirect indication, or may mean that there is an association. For example, *A* indicates *B* may mean that *A* directly indicates *B*, for instance, *B* can be obtained according to *A*; may mean that *A* indirectly indicates *B*, for instance, *A* indicates *C,* and *B* can be obtained according to *C*; or may mean that there is an association between *A* and *B*. In the disclosure, A is the indication information, and *C* is the transmission parameter for the first PDSCH and/or the transmission parameter for the second PDSCH.

In some implementations, S310 may include: taking a HARQ process ID in the transmission parameter for the first PDSCH indicated by the indication information as a HARQ process ID for a PDSCH carrying the indication information, and/or taking a HARQ process ID in the transmission parameter for the second PDSCH indicated by the indication information as a HARQ process ID for a PDSCH that is subsequent to the PDSCH carrying the indication information in the first PDSCH set.

In the embodiments, the HARQ process ID for each PDSCH in the first PDSCH set is indicated by the indication information, which is beneficial to indicating flexibly the HARQ process ID for each PDSCH, thereby improving efficiency of data transmission.

In other words, the indication information is used for indicating the transmission parameter for the first PDSCH and indicating the transmission parameter for the second PDSCH, where the transmission parameter for the first PDSCH and the transmission parameter for the second PDSCH each include a HARQ process ID.

It should be noted that, the transmission parameter for the first PDSCH indicated by the indication information may be different from a transmission parameter for a subsequent PDSCH indicated by the indication information. For example, the transmission parameter for the first PDSCH indicated by the indication information includes a HARQ process ID, and the transmission parameter for the subsequent PDSCH indicated by the indication information may further include at least one of the following besides the HARQ process ID: a TDRA, an FDRA, an MCS, an antenna port, a TCI, etc. The reason is that the indication information is multiplexed on a current PDSCH, and a transmission parameter corresponding to the indication information is likely to be obtained according to a transmission parameter for the PDSCH carrying the indication information. That is, reception and demodulation of the indication information rely on the transmission parameter for the PDSCH carrying the indication information, and therefore, the indication information cannot be used to indicate a transmission parameter related to demodulation of the PDSCH carrying the indication information, but the HARQ process ID will make no difference to a demodulation procedure of the terminal. The transmission parameter corresponding to the indication information may also be independent of a transmission parameter for a PDSCH, and in this case, it is possible to indicate more transmission parameters for the PDSCH carrying the indication information, which is more flexible.

In some embodiments, S310 may include: obtaining a HARQ process ID for a 1^{st} PDSCH in the first PDSCH set, and obtaining HARQ process IDs for other PDSCHs in the first PDSCH set based on the HARQ process ID for the 1^{st} PDSCH.

In some implementations, the sum of the HARQ process ID for the 1^{st} PDSCH and *k* is taken as a HARQ process ID for a (*k*+1)^{th} PDSCH in the first PDSCH set, where *k* is a positive integer.

In the embodiments, the sum of the HARQ process ID for the 1^{st} PDSCH and *k* is taken as the HARQ process ID for the (*k*+1)^{th} PDSCH in the first PDSCH set, where k is a positive integer. As such, it is possible to avoid using additional signaling to indicate the HARQ process ID for the (*k*+1)^{th} PDSCH, thereby reducing protocol change and signaling overhead.

In some implementations, the HARQ process ID for the 1^{st} PDSCH is obtained based on at least one of: the number of HARQ processes, an SPS period corresponding to the first PDSCH set, the number of slots in each system frame, an index of a system frame in which the 1^{st} PDSCH is located, or an index of a slot in which the 1^{st} PDSCH is located in the system frame.

For example, if no HARQ process offset is configured, the HARQ process ID for the 1^{st} PDSCH is obtained based on at least one of: the number of HARQ processes, the SPS period corresponding to the first PDSCH set, the number of slots in each system frame, the index of the system frame in which the 1^{st} PDSCH is located, or the index of the slot in which the 1^{st} PDSCH is located in the system frame.

Exemplarily, the HARQ process ID for the 1^{st} PDSCH is determined based on the following formula: HARQID = [floor (sc × 10 / (numberOfSlotsPerFrame × p)) * N] mod nrofHARQ- Processes

*HARQ_{ID}* represents the HARQ process ID for the 1^{st} PDSCH, *s_{c}* = [(*SFN* x *numberOfSlotsPerFrame)* + *sf*], *SFN* represents the index of the system frame in which the 1^{st} PDSCH is located, *nrofHARQ-Processes* represents the number of configured HARQ processes, *p* represents the SPS period corresponding to the first PDSCH set, *N* is defined in a protocol or indicated by higher-layer signaling, *numberOfSlotsPerFrame* represents the number of slots in each system frame, sf represents the index of the slot in which the 1^{st} PDSCH is located in the system frame, *floor* represents a floor operation, and *mod* represents a modulo operation.

In the embodiments, the HARQ process ID for the 1^{st} PDSCH is determined based on the above formula, which is possible to avoid using additional signaling to indicate the HARQ process ID for the 1^{st} PDSCH, thereby reducing protocol change and signaling overhead.

It should be noted that, *N* may be understood as the number of PDSCHs in the first PDSCH set, or the number of PDSCHs in the configured first PDSCH set, and the disclosure is not limited in this regard.

In some implementations, the HARQ process ID for the 1^{st} PDSCH is obtained based on at least one of: the number of HARQ processes, an SPS period corresponding to the first PDSCH set, the number of slots in each system frame, an index of a system frame in which the 1^{st} PDSCH is located, an index of a slot in which the 1^{st} PDSCH is located in the system frame, or a HARQ process offset.

For example, if a HARQ process offset is configured, the HARQ process ID for the 1^{st} PDSCH is obtained based on at least one of: the number of HARQ processes, the SPS period corresponding to the first PDSCH set, the number of slots in each system frame, the index of the system frame in which the 1^{st} PDSCH is located, the index of the slot in which the 1^{st} PDSCH is located in the system frame, or the HARQ process offset.

Exemplarily, the HARQ process ID for the 1^{st} first PDSCH is determined based on the following formula: HARQID = [floor (sc × 10 / (numberOfSlotsPerFrame × p)) * N] mod nrofHARQ- Processes + harq-ProcID-Offset

*HARQ_{ID}* represents the HARQ process ID for the 1^{st} PDSCH, *s_{c}* = [(*SFN* x *numberOfSlotsPerFrame)* + *sf*], *SFN* represents the index of the system frame in which the 1^{st} PDSCH is located, *nrofHARQ-Processes* represents the number of HARQ processes, *p* represents the SPS period corresponding to the first PDSCH set, *N* is predefined or indicated by higher-layer signaling, *numberOfSlotsPerFrame* represents the number of slots in each system frame, *s_{f}* represents the index of the slot in which the 1^{st} PDSCH is located in the system frame, *harq-ProcID-Offset* indicates the HARQ process offset, *floor* represents a floor operation, and *mod* represents a modulo operation.

In the embodiments, the HARQ process ID for the 1^{st} PDSCH is determined based on the above formula, which is possible to avoid using additional signaling to indicate the HARQ process ID for the 1^{st} PDSCH, thereby reducing protocol change and signaling overhead.

It should be noted that, *N* may be understood as the number of PDSCHs in the first PDSCH set, or the number of PDSCHs in the configured first PDSCH set, and the disclosure is not limited in this regard.

In other alternative embodiments, the HARQ process ID for the 1^{st} PDSCH in the first PDSCH set may also be determined in other manners. For example, in an implementation, a resource corresponding to the first PDSCH set includes an SPS PDSCH resource in an SPS period, and a HARQ process ID corresponding to a 1^{st} SPS PDSCH in the SPS period is indicated by the indication information carried on the 1^{st} SPS PDSCH, that is, the HARQ process ID corresponding to the 1^{st} SPS PDSCH can be flexibly indicated by the indication information. For another example, in another implementation, the HARQ process ID for the 1^{st} SPS PDSCH in each period may also be determined in the following manner.

For an SPS not configured with a HARQ process offset, a HARQ process for each SPS PDSCH is obtained according to the following formula: HARQID = [floor (sc × 10 / (numberOfSlotsPerFrame × p))] mod nrofHARQ- Processes

*HARQ_{ID}* represents a HARQ process ID for a PDSCH, *s_{c}* = [(*SFN* x *numberOfSlotsPerFrame*) + *s_{f}*], *SFN* represents the index of the system frame in which the 1^{st} PDSCH is located, *nrofHARQ-Processes* represents the number of configured HARQ processes, p represents the SPS period corresponding to the first PDSCH set, *numberOfSlotsPerFrame* represents the number of slots in each system frame, *s_{f}* represents the index of the slot in which the 1^{st} PDSCH is located in the system frame, *floor* represents a floor operation, and *mod* represents a modulo operation.

That is, process IDs for SPS PDSCHs are set based on periodicity, and are cycled from 0 to *nrofHARQ-processes-1.*

For an SPS configured with a HARQ process offset, the HARQ process for each SPS PDSCH is obtained according to the following formula: HARQID = [floor (sc × 10 / (numberOfSlotsPerFrame × p))] mod nrofHARQ- Processes + harq-ProcID-Offset

*HARQ_{ID}* represents the HARQ process ID for the 1^{st} PDSCH, *s_{c}* = [(*SFN* x *numberOfSlotsPerFrame)* + *sf], SFN* represents the index the the system frame in which the 1^{st} PDSCH is located, *nrofHARQ-Processes* represents the number of HARQ processes, p represents the SPS period corresponding to the first PDSCH set, *numberOfSlotsPerFrame* represents the number of slots in each system frame, sf represents the index of the slot in which the 1^{st} PDSCH is located in the system frame, *harq-ProcID-Offset* represents the HARQ process offset, *floor* represents a floor operation, and *mod* represents a modulo operation.

In connection with the foregoing solutions, it can be seen that:

In the disclosure, the HARQ process ID for the 1^{st} PDSCH in the first PDSCH set may be determined in the following three manners.

### Manner 1-1:

The HARQ process ID corresponding to the 1^{st} PDSCH in the first PDSCH set in the disclosure is indicated by the indication information carried on the 1^{st} SPS PDSCH.

### Manner 1-2:

If no HARQ process offset is configured, the HARQ process ID for the 1^{st} PDSCH is determined based on the following formula: HARQID = [floor (sc × 10 / (numberOfSlotsPerFrame × p))] mod nrofHARQ- Processes

*HARQ_{ID}* represents the HARQ process ID for the 1^{st} PDSCH, *s_{c}* = [(*SFN* x *numberOfSlotsPerFrame)* + *sf], SFN* represents the index of the system frame in which the 1^{st} PDSCH is located, *nrofHARQ-Processes* represents the number of configured HARQ processes, p represents the SPS period corresponding to the first PDSCH set, N is defined in a protocol or indicated by higher-layer signaling, *numberOfSlotsPerFrame* represents the number of slots in each system frame, sf represents the index of the slot in which the 1^{st} PDSCH is located in the system frame, *floor* represents a floor operation, and *mod* represents a modulo operation.

If a HARQ process offset is configured, the HARQ process ID for the 1^{st} PDSCH is determined based on the following formula: HARQID = [floor (sc × 10 / (numberOfSlotsPerFrame × p))] mod nrofHARQ- Processes + harq-ProcID-Offset

*HARQ_{ID}* represents the HARQ process ID for the 1^{st} PDSCH, *s_{c}* = [(*SFN* x *numberOfSlotsPerFrame)* + *sf], SFN* represents the index of the system frame in which the 1^{st} PDSCH is located, *nrofHARQ-Processes* represents the number of HARQ processes, p represents the SPS period corresponding to the first PDSCH set, *N* is predefined or indicated by higher-layer signaling, *numberOfSlotsPerFrame* represents the number of slots in each system frame, *s_{f}* represents the index of the slot in which the 1^{st} PDSCH is located in the system frame, *harq-ProcID-Offset* represents the HARQ process offset, floor represents a floor operation, and mod represents a modulo operation.

### Manner 1-3:

If no HARQ process offset is configured, the HARQ process ID for the 1^{st} PDSCH is determined based on the following formula: HARQID = [floor (sc × 10 / (numberOfSlotsPerFrame × p))] mod nrofHARQ- Processes

*HARQ_{ID}* represents a HARQ process ID for a PDSCH, *s_{c}* = [(*SFN* x *numberOfSlotsPerFrame)* + *s_{f}*], *SFN* represents the index of the system frame in which the 1^{st} PDSCH is located, *nrofHARQ-Processes* represents the number of configured HARQ processes, p represents the SPS period corresponding to the first PDSCH set, *numberOfSlotsPerFrame* represents the number of slots in each system frame, *s_{f}* represents the index of the slot in which the 1^{st} PDSCH is located in the system frame, *floor* represents a floor operation, and *mod* represents a modulo operation.

If a HARQ process offset is configured, the HARQ process ID for the 1^{st} PDSCH is determined based on the following formula: HARQID = [floor (sc × 10 / (numberOfSlotsPerFrame × p))] mod nrofHARQ- Processes + harq-ProcID-Offset

*HARQ_{ID}* represents the HARQ process ID for the 1^{st} PDSCH, *s_{c}* = [(*SFN* x *numberOfSlotsPerFrame)* + *s_{f}*], *SFN* represents the index of the system frame in which the 1^{st} PDSCH is located, *nrofHARQ-Processes* represents the number of HARQ processes, p represents the SPS period corresponding to the first PDSCH set, *numberOfSlotsPerFrame* represents the number of slots in each system frame, sf represents the index of the slot in which the 1^{st} PDSCH is located in the system frame, *harq-ProcID-Offset* represents the HARQ process offset, *floor* represents a floor operation, and *mod* represents a modulo operation.

Among manner 1-1 to manner 1-3 above, compared with manner 1-3, in manner 1-2, parameter *N* is taken into consideration, that is, the number of PDSCHs in the first PDSCH set, or the number of PDSCHs in the configured first PDSCH set, is taken into consideration.

In the disclosure, HARQ process IDs for other PDSCHs in the first PDSCH set may be determined in the following two manners.

### Manner 2-1:

A HARQ process ID corresponding to a PDSCH other than the 1^{st} PDSCH in the first PDSCH set in the disclosure is indicated by the indication information carried on a PDSCH in the first PDSCH set.

### Manner 2-2:

The sum of the HARQ process ID for the 1^{st} PDSCH and *k* is taken as the HARQ process ID for the (*k*+1)^{th} PDSCH in the first PDSCH set, where *k* is a positive integer.

It should be noted that, the three manners for determining the HARQ process ID for the 1^{st} PDSCH in the first PDSCH set provided in the disclosure may be arbitrarily combined with the two manners for determining the HARQ process ID corresponding to the PDSCH other than the 1^{st} PDSCH in the first PDSCH set provided in the disclosure, for example, manner 1-1 + manner 2-1, manner 1-1 + manner 2-2, manner 1-2 + manner 2-1, manner 1-2 + manner 2-2, manner 1-3 + manner 2-1, manner 1-3 + manner 2-2.

The method 300 will be elaborated below with reference to some embodiments.

### Embodiment 6:

In this embodiment, the HARQ process ID for each PDSCH in the first PDSCH set is obtained in manner 1-2 + manner 2-1 described above.

Assuming that *N* = 2, *nrofHARQ-Processes* = 8, and no HARQ process ID offset is configured, according to the formula in manner 1-2 described above, it can be obtained that a process ID corresponding to a 1^{st} SPS PDSCH in each SPS period starting from a 1^{st} SPS period where SFN = 0 is: [{0,1,2,3...}*2] *mod* 8 = 0,2,4,6,0,2,4,6,0.... Then, in manner 2-1 described above, the HARQ process ID corresponding to the PDSCH other than the 1^{st} PDSCH in the first PDSCH set is indicated by the indication information.

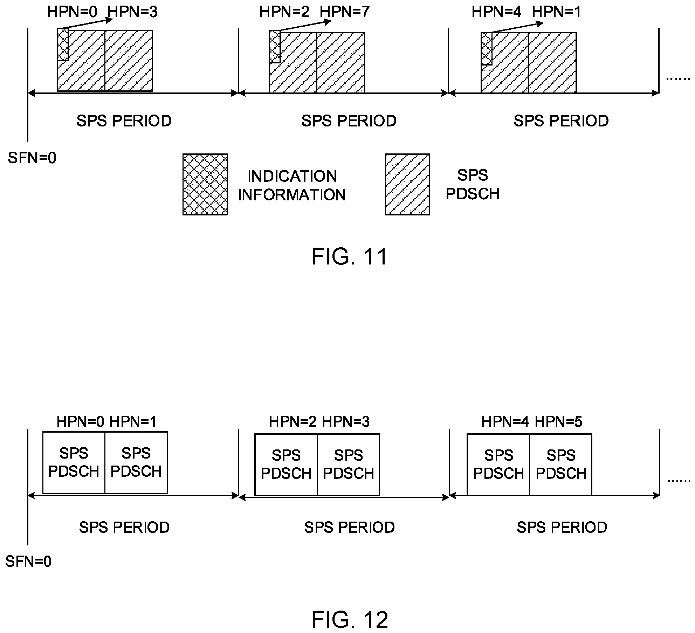

FIG. 11 is a schematic diagram illustrating a case where the indication information indicates the HARQ process ID corresponding to the PDSCH other than the 1^{st} PDSCH in the first PDSCH set provided in embodiments of the disclosure.

As illustrated in FIG. 11, it is assumed that the process ID corresponding to the 1^{st} SPS PDSCH in each SPS period is 0,2,4,6,0,2,4,6,0..., and the indication information carried on the 1^{st} PDSCH is used for indicating a HARQ process ID corresponding to a 2^{nd} PDSCH. For example, in a 1^{st} SPS period, a HARQ process ID corresponding to a 1^{st} PDSCH is 0, and the indication information carried on the 1^{st} PDSCH is used for indicating that a HARQ process ID corresponding to a 2^{nd} PDSCH is 3. For example, in a 2^{nd} SPS period, a HARQ process ID corresponding to a 1^{st} PDSCH is 2, and the indication information carried on the 1^{st} PDSCH is used for indicating that a HARQ process ID corresponding to a 2^{nd} PDSCH is 7. For example, in a 3^{rd} SPS period, a HARQ process ID corresponding to a 1^{st} PDSCH is 4, and the indication information carried on the 1^{st} PDSCH is used for indicating that a HARQ process ID corresponding to a 2^{nd} PDSCH is 1.

### Embodiment 7:

In this embodiment, the HARQ process ID for each PDSCH in the first PDSCH set is obtained in manner 1-2 + manner 2-2 described above.

Assuming that *N* = 2, *nrofHARQ-Processes* = 8, and no HARQ process ID offset is configured, according to the formula in manner 1-2 described above, it can be obtained that a process ID corresponding to a 1^{st} SPS PDSCH in each SPS period starting from a 1^{st} SPS period where SFN = 0 is: [{0,1,2,3...}*2] *mod* 8 = 0,2,4,6,0,2,4,6,0.... Then, in manner 2-2 described above, the sum of the HARQ process ID for the 1^{st} PDSCH and *k is* taken as the HARQ process ID for the (*k*+1)^{th} PDSCH in the first PDSCH set, where *k* is a positive integer.

As illustrated in FIG. 11, it is assumed that the process ID corresponding to the 1^{st} SPS PDSCH in each SPS period is 0,2,4,6,0,2,4,6,0..., and the sum of the HARQ process ID for the 1^{st} PDSCH and *k* is taken as the HARQ process ID for the (*k*+1)^{th} PDSCH in the first PDSCH set, where *k* is a positive integer. For example, in a 1^{st} SPS period, a HARQ process ID corresponding to a 1^{st} PDSCH is 0, and the indication information carried on the 1^{st} PDSCH is used for indicating that a HARQ process ID corresponding to a 2^{nd} PDSCH is 1. For example, in a 2^{nd} SPS period, a HARQ process ID corresponding to a 1^{st} PDSCH is 2, and the indication information carried on the 1^{st} PDSCH is used for indicating that a HARQ process ID corresponding to a 2^{nd} PDSCH is 3. For example, in a 3^{rd} SPS period, a HARQ process ID corresponding to a 1^{st} PDSCH is 4, and the indication information carried on the 1^{st} PDSCH is used for indicating that a HARQ process ID corresponding to a 2^{nd} PDSCH is 5.

Preferable embodiments of the disclosure have been described in detail above with reference to the accompanying drawings. However, the disclosure is not limited to the details described in the foregoing implementations. Within the scope of the technical concept of the disclosure, various simple modifications can be made to the technical solutions of the disclosure, and these simple modifications all fall within the protection scope of the disclosure. For example, various technical features described in the foregoing implementations may be combined in any suitable manner without contradiction, and in order to avoid unnecessary redundancy, various possible combinations are not further described in the disclosure. For another example, various implementations of the disclosure may also be combined in any manner, and as long as the combinations do not depart from the idea of the disclosure, they shall also be considered as contents disclosed in the disclosure.

Exemplarily, the method 200 involved in the disclosure may be implemented on the basis of the method 300, or may be implemented independently. Similarly, the method 300 involved in the disclosure may be implemented on the basis of the method 200, or may be implemented independently. In other words, a scheme for determining a transmission parameter for a PDSCH in the first PDSCH set and a scheme for determining a HARQ process ID for a PDSCH in the first PDSCH set involved in the disclosure may be dependent on each other, or may be implemented independently, and the disclosure is not limited in this regard. For example, the scheme for determining a transmission parameter for a PDSCH in the first PDSCH set may include the scheme for determining a HARQ process ID for a PDSCH in the first PDSCH set, or the scheme for determining a HARQ process ID for a PDSCH in the first PDSCH set may be taken as an example of the scheme for determining a transmission parameter for a PDSCH in the first PDSCH set.

It should also be understood that, in various method embodiments of the disclosure, the magnitude of a sequence number of each of the foregoing processes does not mean an execution order, and an execution order of each process should be determined according to a function and an internal logic of the process, which shall not constitute any limitation to the implementation of embodiments of the disclosure. In addition, in embodiments of the disclosure, the terms "downlink" and "uplink" indicate a transmission direction of a signal or data, where "downlink" indicates that a transmission direction of a signal or data is a first direction from a station to a UE in a cell, and "uplink" indicates that a transmission direction of a signal or data is a second direction from a UE in a cell to a station, For example, a "downlink signal" indicates that a transmission direction of the signal is the first direction. Besides, in embodiments of the disclosure, the term "and/or" herein only describes an association between associated objects, which means that there can be three relationships. Specifically, *A* and/or *B* can mean *A* alone, both *A* and *B* exist, and *B* alone. Besides, the character "/" herein generally indicates that the associated objects are in an "or" relationship.

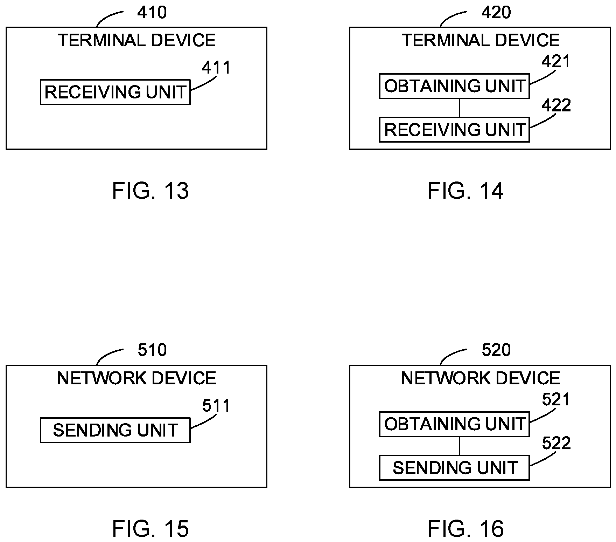

The method embodiments of the disclosure are described in detail above with reference to FIG. 1 to FIG. 12, and the apparatus embodiments of the disclosure will be described in detail below with reference to FIG. 13 to FIG. 18.

FIG. 13 is a schematic block diagram of a terminal device 410 according to embodiments of the disclosure.

As illustrated in FIG. 13, the terminal device 410 may include a receiving unit 411. The receiving unit 411 is configured to receive a first PDSCH set based on a transmission parameter for each PDSCH in the first PDSCH set, where at least one PDSCH in the first PDSCH set carries indication information, and the indication information is used for indicating at least one of: a transmission parameter for a first PDSCH carrying the indication information, or a transmission parameter for a second PDSCH that is subsequent to the first PDSCH in the first PDSCH set.

In some embodiments, for the indication information carried on the last PDSCH among the at least one PDSCH, the indication information is used for indicating at least one of: the transmission parameter for the first PDSCH, or a transmission parameter for some or all of the second PDSCHs.

In some embodiments, for the indication information carried on a PDSCH other than the last PDSCH among the at least one PDSCH, the indication information is used for indicating at least one of: the transmission parameter for the first PDSCH, or a transmission parameter for some or all of the second PDSCHs.

In some embodiments, the transmission parameter includes at least one of: TDRA information, FDRA information, an MCS, an antenna port, a TCI, a HARQ process ID, an RV, or the number of PDSCHs in the first PDSCH set.

In some embodiments, a type of the transmission parameter for the first PDSCH is the same as or different from a type of the transmission parameter for the second PDSCH.

In some embodiments, the transmission parameter for the first PDSCH includes a HARQ process ID.

In some embodiments, the transmission parameter for the second PDSCH includes at least one of: the number of PDSCHs in the first PDSCH set, the number of PDSCHs other than the first PDSCH in the first PDSCH set, TDRA information, FDRA information, an MCS, an antenna port, a TCI, a HARQ process ID, or an RV.

In some embodiments, at least one of some or all of the transmission parameters for the first PDSCH or some or all of the transmission parameters for the second PDSCH is configured or indicated by first signaling, where the some or all of the transmission parameters include at least one of: TDRA information, FDRA information, an MCS, an antenna port, a TCI, or an RV.

In some embodiments, the first signaling is carried in RRC signaling or DCI.

In some embodiments, a transmission parameter for the indication information or an adjustment amount of the transmission parameter for the indication information is predefined, or the transmission parameter for the indication information or the adjustment amount of the transmission parameter for the indication information is configured or indicated by second signaling.

In some embodiments, the second signaling is carried in RRC signaling or DCI.

In some embodiments, the adjustment amount of the transmission parameter for the indication information is an adjustment amount of the transmission parameter for the indication information relative to the transmission parameter for the first PDSCH, or the adjustment amount of the transmission parameter for the indication information is an adjustment amount of the transmission parameter for the indication information relative to a transmission parameter indicated by RRC or DCI.

In some embodiments, the transmission parameter for the indication information includes at least one of: a time-frequency resource occupied by the indication information, an MCS used by the indication information, an antenna port used by the indication information, or a TCI used by the indication information.

In some embodiments, different transmission parameters for the indication information are indicated in different manners or in a same manner.

In some embodiments, the first PDSCH set includes an SPS PDSCH in an SPS period, or the first PDSCH set includes a PDSCH scheduled by DCI.

In some embodiments, the first PDSCH set is used for transmitting different TBs.

It should be understood that, the apparatus embodiments and the method embodiments may correspond to each other, and for similar illustrations, reference can be made to the method embodiments. Specifically, the terminal device 410 illustrated in FIG. 13 may correspond to a corresponding entity for implementing the method 200 in embodiments of the disclosure, and the foregoing and other operations and/or functions of various units in the terminal device 410 are respectively intended to implement corresponding procedures in various methods in FIG. 1, which will not be described again herein for the sake of brevity.

FIG. 14 is a schematic block diagram of a terminal device 420 according to embodiments of the disclosure.

As illustrated in FIG. 14, the terminal device 420 may include an obtaining unit 421 and a receiving unit 422. The obtaining unit 421 is configured to obtain a HARQ process ID for each PDSCH in a first PDSCH set, where the first PDSCH set includes an SPS PDSCH in an SPS period, or the first PDSCH set includes a PDSCH scheduled by DCI. The receiving unit 422 is configured to receive the first PDSCH set based on the HARQ process ID for each PDSCH.

In some embodiments, at least one PDSCH in the first PDSCH set carries indication information, and the indication information is used for indicating at least one of: a transmission parameter for a first PDSCH carrying the indication information, or a transmission parameter for a second PDSCH that is subsequent to the first PDSCH in the first PDSCH set.

In some embodiments, the obtaining unit 421 is specifically configured to: take a HARQ process ID in the transmission parameter for the first PDSCH indicated by the indication information as a HARQ process ID for a PDSCH carrying the indication information, and/or take a HARQ process ID in the transmission parameter for the second PDSCH indicated by the indication information as a HARQ process ID for a PDSCH that is subsequent to the PDSCH carrying the indication information in the first PDSCH set.

In some embodiments, the obtaining unit 421 is specifically configured to: obtain a HARQ process ID for a 1^{st} PDSCH in the first PDSCH set, and obtain HARQ process IDs for other PDSCHs in the first PDSCH set based on the HARQ process ID for the 1^{st} PDSCH.

In some embodiments, the obtaining unit 421 is specifically configured to: take a sum of the HARQ process ID for the 1^{st} PDSCH and *k* as a HARQ process ID for a (*k*+1)^{th} PDSCH in the first PDSCH set, where *k* is a positive integer.

In some embodiments, the obtaining unit 421 is specifically configured to obtain the HARQ process ID for the 1^{st} PDSCH based on at least one of the following information: the number of HARQ processes, an SPS period corresponding to the first PDSCH set, the number of slots in each system frame, an index of a system frame in which the 1^{st} PDSCH is located, or an index of a slot in which the 1^{st} PDSCH is located in the system frame.

In some embodiments, the obtaining unit 421 is specifically configured to determine the HARQ process ID for the 1^{st} PDSCH based on the following formula: HARQID = [floor (sc × 10 / (numberOfSlotsPerFrame × p))] mod nrofHARQ- Processes

*HARQ_{ID}* represents the HARQ process ID for the 1^{st} PDSCH, *s_{c}* = [(*SFN* × *numberOfSlotsPerFrame)* + *s*_{f}], *SFN* represents the index of the system frame in which the 1^{st} PDSCH is located, *nrofHARQ-Processes* represents the number of configured HARQ processes, *p* represents an SPS period corresponding to the first PDSCH set, *N* is defined in a protocol or indicated by higher-layer signaling, *numberOfSlotsPerFrame* represents the number of slots in each system frame, sf represents the index of the slot in which the 1^{st} PDSCH is located in the system frame, *floor* represents a floor operation, and *mod* represents a modulo operation.

In some embodiments, the obtaining unit 421 is specifically configured to obtain the HARQ process ID for the 1^{st} PDSCH based on at least one of the following information: the number of HARQ processes, an SPS period corresponding to the first PDSCH set, the number of slots in each system frame, an index of a system frame in which the 1^{st} PDSCH is located, an index of a slot in which the 1^{st} PDSCH is located in the system frame, or a HARQ process offset.

In some embodiments, the obtaining unit 421 is specifically configured to determine the HARQ process ID for the 1^{st} PDSCH based on the following formula: HARQID = [floor (sc × 10 / (numberOfSlotsPerFrame × p))] mod nrofHARQ- Processes + harq-ProcID-Offset

*HARQ_{ID}* represents the HARQ process ID for the 1^{st} PDSCH, *s_{c}* = [(*SFN* x *numberOfSlotsPerFrame)* + s*_{f}*], *SFN* represents the index of the system frame in which the 1^{st} PDSCH is located, *nrofHARQ-Processes* represents the number of HARQ processes, *p* represents an SPS period corresponding to the first PDSCH set, *N* is predefined or indicated by higher-layer signaling, *numberOfSlotsPerFrame* represents the number of slots in each system frame, sf represents the index of the slot in which the 1^{st} PDSCH is located in the system frame, *harq-ProcID-Offset* indicates the HARQ process offset, *floor* represents a floor operation, and *mod* represents a modulo operation.

It should be understood that, the apparatus embodiments and the method embodiments may correspond to each other, and for similar illustrations, reference can be made to the method embodiments. Specifically, the terminal device 420 illustrated in FIG. 14 may correspond to a corresponding entity for implementing the method 200 in embodiments of the disclosure, and the foregoing and other operations and/or functions of various units in the terminal device 420 are respectively intended to implement corresponding procedures in various methods in FIG. 1, which will not be described again herein for the sake of brevity.

FIG. 15 is a schematic block diagram of a network device 510 according to an embodiment of the disclosure.

As illustrated in FIG. 15, the network device 510 may include a sending unit 511. The sending unit 511 is configured to send a first PDSCH set based on a transmission parameter for each PDSCH in the first PDSCH set, where at least one PDSCH in the first PDSCH set carries indication information, and the indication information is used for indicating at least one of: a transmission parameter for a first PDSCH carrying the indication information, or a transmission parameter for a second PDSCH that is subsequent to the first PDSCH in the first PDSCH set.

In some embodiments, for the indication information carried on the last PDSCH among the at least one PDSCH, the indication information is used for indicating at least one of: the transmission parameter for the first PDSCH, or a transmission parameter for some or all of the second PDSCHs.

In some embodiments, the indication information carried on a PDSCH other than the last PDSCH among the at least one PDSCH, the indication information is used for indicating at least one of: the transmission parameter for the first PDSCH, or a transmission parameter for some or all of the second PDSCHs.

In some embodiments, the transmission parameter includes at least one of: TDRA information, FDRA information, an MCS, an antenna port, a TCI, a HARQ process ID, an RV, or the number of PDSCHs in the first PDSCH set.

In some embodiments, a type of the transmission parameter for the first PDSCH is the same as or different from a type of the transmission parameter for the second PDSCH.

In some embodiments, the transmission parameter for the first PDSCH includes a HARQ process ID.

In some embodiments, the transmission parameter for the second PDSCH includes at least one of: the number of PDSCHs in the first PDSCH set, the number of PDSCHs other than the first PDSCH in the first PDSCH set, TDRA information, FDRA information, an MCS, an antenna port, a TCI, a HARQ process ID, or an RV.

In some embodiments, at least one of some or all of the transmission parameters for the first PDSCH or some or all of the transmission parameters for the second PDSCH is configured or indicated by first signaling, where the some or all of the transmission parameters include at least one of: TDRA information, FDRA information, an MCS, an antenna port, a TCI, or an RV.

In some embodiments, the first signaling is carried in RRC signaling or DCI.

In some embodiments, a transmission parameter for the indication information or an adjustment amount of the transmission parameter for the indication information is predefined, or the transmission parameter for the indication information or the adjustment amount of the transmission parameter for the indication information is configured or indicated by second signaling.

In some embodiments, the second signaling is carried in RRC signaling or DCI.

In some embodiments, the adjustment amount of the transmission parameter for the indication information is an adjustment amount of the transmission parameter for the indication information relative to the transmission parameter for the first PDSCH, or the adjustment amount of the transmission parameter for the indication information is an adjustment amount of the transmission parameter for the indication information relative to a transmission parameter indicated by RRC or DCI.

In some embodiments, the transmission parameter for the indication information includes at least one of: a time-frequency resource occupied by the indication information, an MCS used by the indication information, an antenna port used by the indication information, or a TCI used by the indication information.

In some embodiments, different transmission parameters for the indication information are indicated in different manners or in a same manner.

In some embodiments, the first PDSCH set includes an SPS PDSCH in an SPS period, or the first PDSCH set includes a PDSCH scheduled by DCI.

In some embodiments, the first PDSCH set is used for transmitting different TBs.

It should be understood that, the apparatus embodiments and the method embodiments may correspond to each other, and for similar illustration, reference can be made to the method embodiments. Specifically, the network device 510 illustrated in FIG. 15 may correspond to a corresponding entity for implementing the method 200 in embodiments of the disclosure, and the foregoing and other operations and/or functions of various units in the network device 510 are respectively intended to implement corresponding procedures in various methods in FIG. 1, which will not be described again herein for the sake of brevity.

FIG. 16 is a schematic block diagram of a network device 520 according to embodiments of the disclosure.

As illustrated in FIG. 16, the network device 520 may include an obtaining unit 521 and a sending unit 522. The obtaining unit 521 is configured to obtain a HARQ process ID for each PDSCH in a first PDSCH set, where the first PDSCH set includes an SPS PDSCH in an SPS period, or the first PDSCH set includes a PDSCH scheduled by DCI. The sending unit 522 is configured to send the first PDSCH set based on the HARQ process ID for each PDSCH.

In some embodiments, at least one PDSCH in the first PDSCH set carries indication information, and the indication information is used for indicating at least one of: a transmission parameter for a first PDSCH carrying the indication information, or a transmission parameter for a second PDSCH that is subsequent to the first PDSCH in the first PDSCH set.

In some embodiments, the obtaining unit 521 is specifically configured to: take a HARQ process ID in the transmission parameter for the first PDSCH indicated by the indication information as a HARQ process ID for a PDSCH carrying the indication information, and/or take a HARQ process ID in the transmission parameter for the second PDSCH indicated by the indication information as a HARQ process ID for a PDSCH that is subsequent to the PDSCH carrying the indication information in the first PDSCH set.

In some embodiments, the obtaining unit 521 is specifically configured to: obtain a HARQ process ID for a 1^{st} PDSCH in the first PDSCH set, and obtain HARQ process IDs for other PDSCHs in the first PDSCH set based on the HARQ process ID for the 1^{st} PDSCH.

In some embodiments, the obtaining unit 521 is specifically configured to: take a sum of the HARQ process ID for the 1^{st} PDSCH and *k* as a HARQ process ID for a (*k*+1)^{th} PDSCH in the first PDSCH set, where *k* is a positive integer.

In some embodiments, the obtaining unit 521 is specifically configured to obtain the HARQ process ID for the 1^{st} PDSCH based on at least one of the following information: the number of HARQ processes, an SPS period corresponding to the first PDSCH set, the number of slots in each system frame, an index of a system frame in which the 1^{st} PDSCH is located, or an index of a slot in which the 1^{st} PDSCH is located in the system frame.

In some embodiments, the obtaining unit 521 is specifically configured to determine the HARQ process ID for the 1^{st} PDSCH based on the following formula: HARQID = [floor (sc × 10 / (numberOfSlotsPerFrame × p))] mod nrofHARQ- Processes

*HARQ_{ID}* represents the HARQ process ID for the 1^{st} PDSCH, *s_{c}* = [(*SFN* x *numberOfSlotsPerFrame)* + *s_{f}*], *SFN* represents the index of the system frame in which the 1^{st} PDSCH is located, *nrofHARQ-Processes* represents the number of configured HARQ processes, *p* represents an SPS period corresponding to the first PDSCH set, *N* is defined in a protocol or indicated by higher-layer signaling, *numberOfSlotsPerFrame* represents the number of slots in each system frame, *s_{f}* represents the index of the slot in which the 1^{st} PDSCH is located in the system frame, *floor* represents a floor operation, and *mod* represents a modulo operation.

In some embodiments, the obtaining unit 521 is specifically configured to obtain the HARQ process ID for the 1^{st} PDSCH based on at least one of the following information: the number of HARQ processes, an SPS period corresponding to the first PDSCH set, the number of slots in each system frame, an index of a system frame in which the 1^{st} PDSCH is located, an index of a slot in which the 1^{st} PDSCH is located in the system frame, or a HARQ process offset.

In some embodiments, the obtaining unit 521 is specifically configured to determine the HARQ process ID for the 1^{st} PDSCH based on the following formula: HARQID = [floor (sc × 10 / (numberOfSlotsPerFrame × p))] mod nrofHARQ- Processes + harq-ProcID-Offset

*HARQ_{ID}* represents the HARQ process ID for the 1^{st} PDSCH, *s_{c}* = [(*SFN* x *numberOfSlotsPerFrame)* + *s_{f}*], *SFN* represents the index of the system frame in which the 1^{st} PDSCH is located, *nrofHARQ-Processes* represents the number of HARQ processes, *p* represents an SPS period corresponding to the first PDSCH set, *N* is predefined or indicated by higher-layer signaling, *numberOfSlotsPerFrame* represents the number of slots in each system frame, sf represents the index of the slot in which the 1^{st} PDSCH is located in the system frame, *harq-ProcID-Offset* indicates the HARQ process offset, *floor* represents a floor operation, and *mod* represents a modulo operation.

It should be understood that, the apparatus embodiments and the method embodiments may correspond to each other, and for similar illustrations, reference can be made to the method embodiments. Specifically, the network device 520 illustrated in FIG. 16 may correspond to a corresponding entity for implementing the method 200 in embodiments of the disclosure, and the foregoing and other operations and/or functions of various units in the network device 520 are respectively intended to implement corresponding procedures in various methods in FIG. 1, which will not be described again herein for the sake of brevity.

The communication device in embodiments of the disclosure has been described above from the perspective of functional modules with reference to the accompanying drawings. It should be understood that, the functional module may be implemented in the form of hardware, or may be implemented by an instruction in the form of software, or may be implemented by a combination of hardware and software module. Specifically, each step of the method embodiments of the disclosure may be completed by an integrated logic circuit of hardware in a processor and/or an instruction in the form of software. The steps of the method disclosed in embodiments of the disclosure may be directly implemented by a hardware decoding processor, or may be performed by hardware and software modules in the decoding processor. Optionally, the software module may be located in a storage medium such as a random access memory (RAM), a flash memory, a read only memory (ROM), a programmable ROM (PROM), or an electrically erasable programmable memory, registers, and the like. The storage medium is located in a memory. The processor reads the information in the memory, and completes the steps of the foregoing method embodiments with the hardware of the processor.

For example, the obtaining unit 421 or the obtaining unit 521 above may be implemented by a processor, and the receiving unit 411, the receiving unit 422, the receiving unit 511, or the receiving unit 522 above may be implemented by a transceiver.

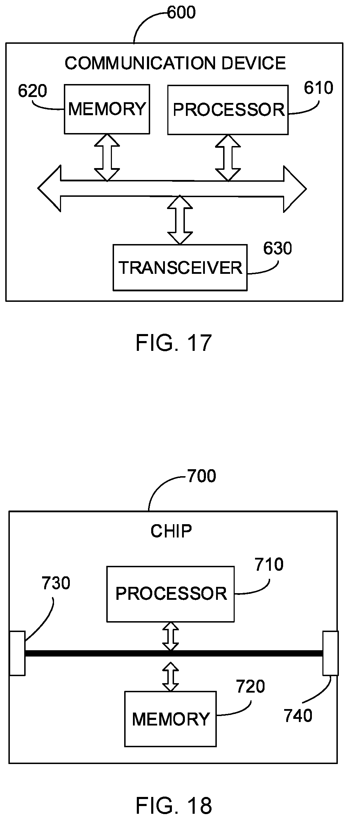

FIG. 17 is a schematic structural diagram of a communication device 600 according to embodiments of the disclosure.

As illustrated in FIG. 17, the communication device 600 may include a processor 610.

The processor 610 can invoke and execute computer programs from a memory, to implement the method in embodiments of the disclosure.

As illustrated in FIG. 17, the communication device 600 may further include the memory 620.

The memory 620 can be configured to store indication information, or store codes, instructions, etc. executable by the processor 610. The processor 610 can invoke and execute the computer programs stored in the memory 620, to perform the method in embodiments of the disclosure. The memory 620 may be a separate device independent of the processor 610, or may be integrated into the processor 610.

As illustrated in FIG. 17, the communication device 600 may further include a transceiver 630.

The processor 610 can control the transceiver 630 to communicate with other devices, specifically, to transmit information or data to other devices or to receive information or data transmitted by other devices. The transceiver 630 may include a transmitter and a receiver. The transceiver 630 may further include an antenna, where one or more antennas can be provided.

It should be understood that, various components in the communication device 600 are connected together over a bus system. In addition to a data bus, the bus system may further include a power bus, a control bus, and a status signal bus.

It should also be understood that, the communication device 600 may be a terminal device in embodiments of the disclosure, and the communication device 600 may implement corresponding procedures implemented by the terminal device in various methods in embodiments of the disclosure. That is, the communication device 600 in embodiments of the disclosure may correspond to the terminal device 410 or the terminal device 420 in embodiments of the disclosure, and may correspond to a corresponding entity for implementing the method 200 or the method 300 according to embodiments of the disclosure, which not be described again herein for the sake of brevity. Similarly, the communication device 600 may be a network device in embodiments of the disclosure, and the communication device 600 may implement corresponding procedures implemented by the network device in various methods in embodiments of the disclosure. That is, the communication device 600 in embodiments of the disclosure may correspond to the network device 510 or the network device 520 in embodiments of the disclosure, and may correspond to a corresponding entity for implementing the method 200 or the method 300 according to embodiments of the disclosure, which will not be described again herein for the sake of brevity.

In addition, embodiments of the disclosure further provide a chip.

For example, the chip may be an integrated circuit chip with signal processing capabilities, which can implement or execute various methods, steps, or logic blocks disclosed in embodiments of the disclosure. The chip may also be referred to as a systemon-chip (SOC). Optionally, the chip is applicable to various communication devices, to cause a communication device equipped with the chip to perform various methods, steps, or logic blocks disclosed in embodiments of the disclosure.

FIG. 7 is a schematic structural diagram of a chip 700 according to embodiments of the disclosure.

As illustrated in FIG. 7, the chip 700 includes a processor 710.

The processor 710 can invoke and execute computer programs from a memory, to implement the method in embodiments of the disclosure.

As illustrated in FIG. 7, the chip 700 may further include the memory 720.

The processor 710 can invoke and execute computer programs from the memory 720 to implement the method in embodiments of the disclosure. The memory 720 may be configured to store indication information, and may also be configured to store codes, instructions, and the like that are executable by the processor 710. The memory 720 may be a separate device independent of the processor 710, or may be integrated into the processor 710.

As illustrated in FIG. 7, the chip 700 may further include an input interface 730.

The processor 710 can control the input interface 730 to communicate with other devices or chips, and specifically, obtain information or data sent by other devices or chips.

As illustrated in FIG. 7, the chip 700 may further include an output interface 740.

The processor 710 can control the output interface 740 to communicate with other devices or chips, and specifically, output information or data to other devices or chips.

It should be understood that, the chip 700 is applicable to the network device in embodiments of the disclosure. The chip can implement the operations performed by the network device in various methods in embodiments of the disclosure, and can also implement the operations performed by the terminal device in various methods in embodiments in the disclosure, which will not be described again herein for the sake of brevity.

It should also be understood that, various components in the chip 700 are connected together over a bus system. In addition to a data bus, the bus system may further include a power bus, a control bus, and a status signal bus.

The processor described above may include but is not limited to a generalpurpose processor, a digital signal processor (DSP), an application specific integrated circuit (ASIC), a field programmable gate array (FPGA), or other programmable logic devices, discrete gates or transistor logic devices, discrete hardware components, etc.

The processor can be configured to perform or execute the methods, steps, and logic blocks disclosed in embodiments of the disclosure. The steps of the method disclosed in embodiments of the disclosure may be directly implemented by a hardware decoding processor, or may be performed by hardware and software modules in the decoding processor. The software module can be located in a storage medium such as a RAM, a flash memory, a ROM, a PROM, or an erasable programmable memory, registers, and the like. The storage medium is located in the memory. The processor reads the information in the memory, and completes the steps of the method described above with the hardware of the processor.

The memory described above may include but is not limited to a volatile memory and/or a non-volatile memory. The non-volatile memory may be a ROM, a PROM, an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM).

It should be noted that, the memory described in the disclosure is intended to include, but is not limited to, these and any other suitable types of memory.

Embodiments of the disclosure further provide a computer-readable storage medium. The computer-readable storage medium is configured to store computer programs. The computer-readable storage medium stores one or more programs. The one or more programs include instructions which, when executed by a portable electronic device including multiple application programs, are operable with the portable electronic device to perform the wireless communication method provided in the disclosure. Optionally, the computer-readable storage medium is applicable to the network device of embodiments of the disclosure. The computer programs are operable with a computer to implement the operations performed by the network device in various methods in embodiments of the disclosure, which will not be described again herein for the sake of brevity. Optionally, the computer-readable storage medium is applicable to the mobile terminal / the terminal device of embodiments of the disclosure. The computer programs are operable with a computer to implement the operations performed by the mobile terminal / the terminal device in various methods in embodiments of the disclosure, which will not be described again herein for the sake of brevity.

Embodiments of the disclosure further provide a computer program product. The computer program product includes computer programs. Optionally, the computer program product is applicable to the network device of embodiments of the disclosure. The computer programs are operable with a computer to implement the operations performed by the network device in various methods in embodiments of the disclosure, which will not be described again herein for the sake of brevity. Optionally, the computer program product is applicable to the mobile terminal / the terminal device of embodiments of the disclosure. The computer programs are operable with a computer to implement the operations performed by the mobile terminal / the terminal device in various methods in embodiments of the disclosure, which will not be described again herein for the sake of brevity.

Embodiments of the disclosure further provide a computer program. The computer program, when executed by a computer, is operable with the computer to perform the wireless communication method provided in the disclosure. Optionally, the computer program is applicable to the network device of embodiments of the disclosure. The computer program, when executed by a computer, is operable with the computer to implement the operations performed by the network device in various methods in embodiments of the disclosure, which will not be described again herein for the sake of brevity. Optionally, the computer program is applicable to the mobile terminal / the terminal device in embodiments of the disclosure. The computer program, when executed by a computer, is operable with the computer to implement the operations performed by the mobile terminal the terminal device in various methods in embodiments of the disclosure, which will not be described again herein for the sake of brevity.

Embodiments of the disclosure further provide a communication system. The communication system may include the terminal device and the network device described above, to constitute the communication system 100 illustrated in FIG. 1, which will not be described again herein for the sake of brevity. It is to be noted that, the term "system" or the like in the disclosure may also be referred to as "network management architecture" or "network architecture", etc.

It should be also understood that, the terms used in embodiments of the disclosure and the appended claims are merely intended for describing the embodiments, rather than limiting embodiments of the disclosure. For example, the singular form "a/an", "said", "above/foregoing", and "the" used in embodiments of the disclosure and the appended claims are also intended to include multiple forms, unless specified otherwise in the context.

Those of ordinary skill in the art will appreciate that units and algorithmic operations of various examples described in connection with embodiments of the disclosure can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the disclosure. If implemented as software functional units and sold or used as standalone products, they may be stored in a computer-readable storage medium. Based on such an understanding, the essential technical solution, or the portion that contributes to the related art, or part of the technical solution of the disclosure may be embodied as software products. The computer software products can be stored in a storage medium and may include multiple instructions that, when executed, can cause a computer device, e.g., a personal computer, a server, a network device, etc., to execute some or all operations of the methods described in various embodiments of the disclosure. The above storage medium may include various kinds of media that can store program codes, such as a universal serial bus (USB) flash disk, a mobile hard drive, a ROM, a RAM, a magnetic disk, or an optical disk.

It will be evident to those skilled in the art that, for the sake of convenience and brevity, in terms of the specific working processes of the foregoing systems, apparatuses, and units, reference can be made to the corresponding processes in the foregoing method embodiments, which will not be described again herein. It will be appreciated that the systems, apparatuses, and methods disclosed in embodiments of the disclosure may also be implemented in various other manners. For example, the division of units, modules, or assemblies in the foregoing apparatus embodiments is only a division of logical functions, and there may be other manners of division available in practice, e.g., multiple units, modules, or assemblies may be combined or may be integrated into another system, or some features may be ignored or skipped. For another example, separated units/modules/assemblies as illustrated may or may not be physically separated, that is, may reside at one location or may be distributed to multiple networked units. Some or all of the units/modules/assemblies may be selectively adopted according to practical needs to achieve desired objectives of the disclosure. Finally, it should be noted that, the coupling or direct coupling or communication connection as illustrated or discussed may be an indirect coupling or communication connection through some interface, device, or unit, and may be electrical, mechanical, or otherwise.

The foregoing contents are merely implementations of embodiments of the disclosure, but are not intended to limit the protection scope of embodiments of the disclosure. Any variation or replacement easily thought of by those skilled in the art within the technical scope disclosed in embodiments of the disclosure shall belong to the protection scope of embodiments of the disclosure. Therefore, the protection scope of embodiments of the disclosure shall be subject to the protection scope of the claims.

## Claims

1. A wireless communication method, comprising:
receiving, by a terminal device, a first physical downlink shared channel (PDSCH) set based on a transmission parameter for each PDSCH in the first PDSCH set, wherein
at least one PDSCH in the first PDSCH set carries indication information, and the indication information is used for indicating at least one of: a transmission parameter for a first PDSCH carrying the indication information, or a transmission parameter for a second PDSCH that is subsequent to the first PDSCH in the first PDSCH set.

2. The method of claim 1, wherein for the indication information carried on the last PDSCH among the at least one PDSCH, the indication information is used for indicating at least one of: the transmission parameter for the first PDSCH, or a transmission parameter for some or all of second PDSCHs.

3. The method of claim 1, wherein for the indication information carried on a PDSCH other than the last PDSCH among the at least one PDSCH, the indication information is used for indicating at least one of: the transmission parameter for the first PDSCH, or a transmission parameter for some or all of second PDSCHs.

4. The method of any of claims 1 to 3, wherein the transmission parameter comprises at least one of:
time domain resource allocation (TDRA) information, frequency domain resource allocation (FDRA) information, a modulation and coding scheme (MCS), an antenna port, a transmission configuration indication (TCI), a hybrid automatic repeat reQuest (HARQ) process identity (ID), a redundancy version (RV), or the number of PDSCHs in the first PDSCH set.

5. The method of any of claims 1 to 4, wherein a type of the transmission parameter for the first PDSCH is the same as or different from a type of the transmission parameter for the second PDSCH.

6. The method of claim 5, wherein the transmission parameter for the first PDSCH comprises a HARQ process ID.

7. The method of claim 5 or 6, wherein the transmission parameter for the second PDSCH comprises at least one of:
the number of PDSCHs in the first PDSCH set, the number of PDSCHs other than the first PDSCH in the first PDSCH set, TDRA information, FDRA information, an MCS, an antenna port, a TCI, a HARQ process ID, or an RV.

8. The method of any of claims 1 to 7, wherein at least one of some or all of the transmission parameters for the first PDSCH or some or all of the transmission parameters for the second PDSCH is configured or indicated by first signaling, wherein
the some or all of the transmission parameters comprise at least one of: TDRA information, FDRA information, an MCS, an antenna port, a TCI, or an RV.

9. The method of claim 8, wherein the first signaling is carried in radio resource control (RRC) signaling or downlink control information (DCI).

10. The method of any of claims 1 to 8, wherein a transmission parameter for the indication information or an adjustment amount of the transmission parameter for the indication information is predefined, or the transmission parameter for the indication information or the adjustment amount of the transmission parameter for the indication information is configured or indicated by second signaling.

11. The method of claim 10, wherein the second signaling is carried in RRC signaling or DCI.

12. The method of claim 10, wherein the adjustment amount of the transmission parameter for the indication information is an adjustment amount of the transmission parameter for the indication information relative to the transmission parameter for the first PDSCH, or the adjustment amount of the transmission parameter for the indication information is an adjustment amount of the transmission parameter for the indication information relative to a transmission parameter indicated by RRC or DCI.

13. The method of claim 10, wherein the transmission parameter for the indication information comprises at least one of: a time-frequency resource occupied by the indication information, an MCS used by the indication information, an antenna port used by the indication information, or a TCI used by the indication information.

14. The method of claim 10, wherein different transmission parameters for the indication information are indicated in different manners or in a same manner.

15. The method of any of claims 1 to 14, wherein the first PDSCH set comprises a semi-persistent scheduling (SPS) PDSCH in an SPS period, or the first PDSCH set comprises a PDSCH scheduled by DCI.

16. The method of any of claims 1 to 15, wherein the first PDSCH set is used for transmitting different transport blocks (TBs).

17. A wireless communication method, comprising:
obtaining, by a terminal device, a hybrid automatic repeat reQuest (HARQ) process identity (ID) for each physical downlink shared channel (PDSCH) in a first PDSCH set, wherein the first PDSCH set comprises a semi-persistent scheduling (SPS) PDSCH in an SPS period, or the first PDSCH set comprises a PDSCH scheduled by downlink control information (DCI); and
receiving, by the terminal device, the first PDSCH set based on the HARQ process ID for each PDSCH.

18. The method of claim 17, wherein at least one PDSCH in the first PDSCH set carries indication information, and the indication information is used for indicating at least one of: a transmission parameter for a first PDSCH carrying the indication information, or a transmission parameter for a second PDSCH that is subsequent to the first PDSCH in the first PDSCH set.

19. The method of claim 18, wherein obtaining the HARQ process ID for each PDSCH in the first PDSCH set comprises:
taking, by the terminal device, a HARQ process ID in the transmission parameter for the first PDSCH indicated by the indication information as a HARQ process ID for a PDSCH carrying the indication information; and/or
taking, by the terminal device, a HARQ process ID in the transmission parameter for the second PDSCH indicated by the indication information as a HARQ process ID for a PDSCH that is subsequent to the PDSCH carrying the indication information in the first PDSCH set.

20. The method of any of claims 17 to 19, wherein obtaining, by the terminal device, the HARQ process ID for each PDSCH in the first PDSCH set comprises:
obtaining, by the terminal device, a HARQ process ID for a 1^{st} PDSCH in the first PDSCH set; and
obtaining, by the terminal device, HARQ process IDs for other PDSCHs in the first PDSCH set based on the HARQ process ID for the 1^{st} PDSCH.

21. The method of claim 20, wherein obtaining, by the terminal device, the HARQ process IDs for other PDSCHs in the first PDSCH set based on the HARQ process ID for the 1^{st} PDSCH comprises:
taking, by the terminal device, a sum of the HARQ process ID for the 1^{st} PDSCH and *k* as a HARQ process ID for a (k+1)^{th} PDSCH in the first PDSCH set, wherein k is a positive integer.

22. The method of claim 20 or 21, wherein obtaining, by the terminal device, the HARQ process ID for the 1^{st} PDSCH in the first PDSCH set comprises:
obtaining, by the terminal device, the HARQ process ID for the 1^{st} PDSCH based on at least one of the following information:
the number of HARQ processes, an SPS period corresponding to the first PDSCH set, the number of slots in each system frame, an index of a system frame in which the 1^{st} PDSCH is located, or an index of a slot in which the 1^{st} PDSCH is located in the system frame.

23. The method of claim 22, wherein obtaining, by the terminal device, the HARQ process ID for the 1^{st} PDSCH based on at least one of the following information comprises:
determining, by the terminal device, the HARQ process ID for the 1^{st} PDSCH based on the following formula: HARQID = [floor (sc × 10 / (numberOfSlotsPerFrame × p))] mod nrofHARQ- Processes
wherein HARQ_{ID} represents the HARQ process ID for the 1^{st} PDSCH, s_{c} = [(SFN x *numberOfSlotsPerFrame)* + *sf], SFN* represents the index of the system frame in which the 1^{st} PDSCH is located, *nrofHARQ-Processes* represents the number of configured HARQ processes, p represents an SPS period corresponding to the first PDSCH set, N is defined in a protocol or indicated by higher-layer signaling, *numberOfSlotsPerFrame* represents the number of slots in each system frame, sf represents the index of the slot in which the 1^{st} PDSCH is located in the system frame, *floor* represents a floor operation, and *mod* represents a modulo operation.

24. The method of claim 20 or 21, wherein obtaining, by the terminal device, the HARQ process ID for the 1^{st} PDSCH in the first PDSCH set comprises:
obtaining, by the terminal device, the HARQ process ID for the 1^{st} PDSCH based on at least one of the following information:
the number of HARQ processes, an SPS period corresponding to the first PDSCH set, the number of slots in each system frame, an index of a system frame in which the 1^{st} PDSCH is located, an index of a slot in which the 1^{st} PDSCH is located in the system frame, or a HARQ process offset.

25. The method of claim 24, wherein obtaining, by the terminal device, the HARQ process ID for the 1^{st} PDSCH based on at least one of the following information comprises:
determining, by the terminal device, the HARQ process ID for the 1^{st} PDSCH based on the following formula: HARQID = [floor (sc × 10 / (numberOfSlotsPerFrame × p))] mod nrofHARQ- Processes + harq-ProcID-Offset
wherein HARQ_{ID} represents the HARQ process ID for the 1^{st} PDSCH, s_{c} = [(SFN x *numberOfSlotsPerFrame)* + *sf], SFN* represents the index of the system frame in which the 1^{st} PDSCH is located, *nrofHARQ-Processes* represents the number of HARQ processes, p represents an SPS period corresponding to the first PDSCH set, N is predefined or indicated by higher-layer signaling, *numberOfSlotsPerFrame* represents the number of slots in each system frame, sf represents the index of the slot in which the 1^{st} PDSCH is located in the system frame, *harq-ProcID-Offset* indicates the HARQ process offset, *floor* represents a floor operation, and *mod* represents a modulo operation.

26. A wireless communication method, comprising:
sending, by a network device, a first physical downlink shared channel (PDSCH) set based on a transmission parameter for each PDSCH in the first PDSCH set, wherein
at least one PDSCH in the first PDSCH set carries indication information, and the indication information is used for indicating at least one of: a transmission parameter for a first PDSCH carrying the indication information, or a transmission parameter for a second PDSCH that is subsequent to the first PDSCH in the first PDSCH set.

27. The method of claim 26, wherein for the indication information carried on the last PDSCH among the at least one PDSCH, the indication information is used for indicating at least one of: the transmission parameter for the first PDSCH, or a transmission parameter for some or all of second PDSCHs.

28. The method of claim 26, wherein for the indication information carried on a PDSCH other than the last PDSCH among the at least one PDSCH, the indication information is used for indicating at least one of: the transmission parameter for the first PDSCH, or a transmission parameter for some or all of second PDSCHs.

29. The method of any of claims 26 to 28, wherein the transmission parameter comprises at least one of:
time domain resource allocation (TDRA) information, frequency domain resource allocation (FDRA) information, a modulation and coding scheme (MCS), an antenna port, a transmission configuration indication (TCI), a hybrid automatic repeat reQuest (HARQ) process identity (ID), a redundancy version (RV), or the number of PDSCHs in the first PDSCH set.

30. The method of any of claims 26 to 29, wherein a type of the transmission parameter for the first PDSCH is the same as or different from a type of the transmission parameter for the second PDSCH.

31. The method of claim 30, wherein the transmission parameter for the first PDSCH comprises a HARQ process ID.

32. The method of claim 30 or 31, wherein the transmission parameter for the second PDSCH comprises at least one of:
the number of PDSCHs in the first PDSCH set, the number of PDSCHs other than the first PDSCH in the first PDSCH set, TDRA information, FDRA information, an MCS, an antenna port, a TCI, a HARQ process ID, or an RV.

33. The method of any of claims 26 to 32, wherein at least one of some or all of the transmission parameters for the first PDSCH or some or all of the transmission parameters for the second PDSCH is configured or indicated by first signaling, wherein
the some or all of the transmission parameters comprise at least one of: TDRA information, FDRA information, an MCS, an antenna port, a TCI, or an RV.

34. The method of claim 33, wherein the first signaling is carried in radio resource control (RRC) signaling or downlink control information (DCI).

35. The method of any of claims 26 to 34, wherein a transmission parameter for the indication information or an adjustment amount of the transmission parameter for the indication information is predefined, or the transmission parameter for the indication information or the adjustment amount of the transmission parameter for the indication information is configured or indicated by second signaling.

36. The method of claim 35, wherein the second signaling is carried in RRC signaling or DCI.

37. The method of claim 35, wherein the adjustment amount of the transmission parameter for the indication information is an adjustment amount of the transmission parameter for the indication information relative to the transmission parameter for the first PDSCH, or the adjustment amount of the transmission parameter for the indication information is an adjustment amount of the transmission parameter for the indication information relative to a transmission parameter indicated by RRC or DCI.

38. The method of claim 35, wherein the transmission parameter for the indication information comprises at least one of: a time-frequency resource occupied by the indication information, an MCS used by the indication information, an antenna port used by the indication information, or a TCI used by the indication information.

39. The method of claim 35, wherein different transmission parameters for the indication information are indicated in different manners or in a same manner.

40. The method of any of claims 26 to 39, wherein the first PDSCH set comprises a semi-persistent scheduling (SPS) PDSCH in an SPS period, or the first PDSCH set comprises a PDSCH scheduled by DCI.

41. The method of any of claims 26 to 40, wherein the first PDSCH set is used for transmitting different transport blocks (TBs).

42. A wireless communication method, comprising:
obtaining, by a network device, a hybrid automatic repeat reQuest (HARQ) process identity (ID) for each physical downlink shared channel (PDSCH) in a first PDSCH set, wherein the first PDSCH set comprises a semi-persistent scheduling (SPS) PDSCH in an SPS period, or the first PDSCH set comprises a PDSCH scheduled by downlink control information (DCI); and
sending, by the network device, the first PDSCH set based on the HARQ process ID for each PDSCH.

43. The method of claim 42, wherein at least one PDSCH in the first PDSCH set carries indication information, and the indication information is used for indicating at least one of: a transmission parameter for a first PDSCH carrying the indication information, or a transmission parameter for a second PDSCH that is subsequent to the first PDSCH in the first PDSCH set.

44. The method of claim 43, wherein obtaining, by the network device, the HARQ process ID for each PDSCH in the first PDSCH set comprises:
taking, by the network device, a HARQ process ID in the transmission parameter for the first PDSCH indicated by the indication information as a HARQ process ID for a PDSCH carrying the indication information; and/or
taking, by the network device, a HARQ process ID in the transmission parameter for the second PDSCH indicated by the indication information as a HARQ process ID for a PDSCH that is subsequent to the PDSCH carrying the indication information in the first PDSCH set.

45. The method of any of claims 42 to 44, wherein obtaining, by the network device, the HARQ process ID for each PDSCH in the first PDSCH set comprises:
obtaining, by the network device, a HARQ process ID for a 1^{st} PDSCH in the first PDSCH set; and
obtaining, by the network device, HARQ process IDs for other PDSCHs in the first PDSCH set based on the HARQ process ID for the 1^{st} PDSCH.

46. The method of claim 45, wherein obtaining, by the network device, the HARQ process IDs for other PDSCHs in the first PDSCH set based on the HARQ process ID for the 1^{st} PDSCH comprises:
taking, by the network device, a sum of the HARQ process ID for the 1^{st} PDSCH and *k* as a HARQ process ID for a (*k*+1)^{th} PDSCH in the first PDSCH set, wherein k is a positive integer.

47. The method of claim 45 or 46, wherein obtaining, by the network device, the HARQ process ID for the 1^{st} PDSCH in the first PDSCH set comprises:
obtaining, by the network device, the HARQ process ID for the 1^{st} PDSCH based on at least one of the following information:
the number of HARQ processes, an SPS period corresponding to the first PDSCH set, the number of slots in each system frame, an index of a system frame in which the 1^{st} PDSCH is located, or an index of a slot in which the 1^{st} PDSCH is located in the system frame.

48. The method of claim 47, wherein obtaining, by the network device, the HARQ process ID for the 1^{st} PDSCH based on at least one of the following information comprises:
determining, by the network device, the HARQ process ID for the 1^{st} PDSCH based on the following formula: HARQID = [floor (sc × 10 / (numberOfSlotsPerFrame × p))] mod nrofHARQ- Processes
wherein *HARQ_{ID}* represents the HARQ process ID for the 1^{st} PDSCH, s_{c} = [(SFN x *numberOfSlotsPerFrame)* + *sf], SFN* represents the index of the system frame in which the 1^{st} PDSCH is located, *nrofHARQ-Processes* represents the number of configured HARQ processes, p represents an SPS period corresponding to the first PDSCH set, N is defined in a protocol or indicated by higher-layer signaling, *numberOfSlotsPerFrame* represents the number of slots in each system frame, sf represents the index of the slot in which the 1^{st} PDSCH is located in the system frame, *floor* represents a floor operation, and *mod* represents a modulo operation.

49. The method of claim 45 or 46, wherein obtaining, by the network device, the HARQ process ID for the 1^{st} PDSCH in the first PDSCH set comprises:
obtaining, by the network device, the HARQ process ID for the 1^{st} PDSCH based on at least one of the following information:
the number of HARQ processes, an SPS period corresponding to the first PDSCH set, the number of slots in each system frame, an index of a system frame in which the 1^{st} PDSCH is located, an index of a slot in which the 1^{st} PDSCH is located in the system frame, or a HARQ process offset.

50. The method of claim 49, wherein obtaining, by the network device, the HARQ process ID for the 1^{st} PDSCH based on at least one of the following information comprises:
determining, by the network device, the HARQ process ID for the 1^{st} PDSCH based on the following formula: HARQID = [floor (sc × 10 / (numberOfSlotsPerFrame × p))] mod nrofHARQ- Processes + harq-ProcID-Offset
wherein HARQ_{ID} represents the HARQ process ID for the 1^{st} PDSCH, s_{c} = [(SFN x *numberOfSlotsPerFrame)* + *sf], SFN* represents the index of the system frame in which the 1^{st} PDSCH is located, *nrofHARQ-Processes* represents the number of HARQ processes, p represents an SPS period corresponding to the first PDSCH set, N is predefined or indicated by higher-layer signaling, *numberOfSlotsPerFrame* represents the number of slots in each system frame, sf represents the index of the slot in which the 1^{st} PDSCH is located in the system frame, *harq-ProcID-Offset* indicates the HARQ process offset, *floor* represents a floor operation, and *mod* represents a modulo operation.

51. A terminal device, comprising:
a receiving unit configured to receive a first physical downlink shared channel (PDSCH) set based on a transmission parameter for each PDSCH in the first PDSCH set, wherein
at least one PDSCH in the first PDSCH set carries indication information, and the indication information is used for indicating at least one of: a transmission parameter for a first PDSCH carrying the indication information, or a transmission parameter for a second PDSCH that is subsequent to the first PDSCH in the first PDSCH set.

52. A terminal device, comprising:
an obtaining unit configured to obtain a hybrid automatic repeat reQuest (HARQ) process identity (ID) for each physical downlink shared channel (PDSCH) in a first PDSCH set, wherein the first PDSCH set comprises a semi-persistent scheduling (SPS) PDSCH in an SPS period, or the first PDSCH set comprises a PDSCH scheduled by downlink control information (DCI); and
a receiving unit configured to receive the first PDSCH set based on the HARQ process ID for each PDSCH.

53. A network device, comprising:
a sending unit configured to send a first physical downlink shared channel (PDSCH) set based on a transmission parameter for each PDSCH in the first PDSCH set, wherein
at least one PDSCH in the first PDSCH set carries indication information, and the indication information is used for indicating at least one of: a transmission parameter for a first PDSCH carrying the indication information, or a transmission parameter for a second PDSCH that is subsequent to the first PDSCH in the first PDSCH set.

54. A network device, comprising:
an obtaining unit configured to obtain a hybrid automatic repeat reQuest (HARQ) process identity (ID) for each physical downlink shared channel (PDSCH) in a first PDSCH set, wherein the first PDSCH set comprises a semi-persistent scheduling (SPS) PDSCH in an SPS period, or the first PDSCH set comprises a PDSCH scheduled by downlink control information (DCI); and
a sending unit configured to send the first PDSCH set based on the HARQ process ID for each PDSCH.

55. A terminal device, comprising:
a memory configured to store computer programs; and
a processor configured to invoke and execute the computer programs stored in the memory, to perform the method of any of claims 1 to 16.

56. A terminal device, comprising:
a memory configured to store computer programs; and
a processor configured to invoke and execute the computer programs stored in the memory, to perform the method of any of claims 17 to 25.

57. A network device, comprising:
a memory configured to store computer programs; and
a processor configured to invoke and execute the computer programs stored in the memory, to perform the method of any of claims 26 to 41.

58. A network device, comprising:
a memory configured to store computer programs; and
a processor configured to invoke and execute the computer programs stored in the memory, to perform the method of any of claims 42 to 50.

59. A network device, comprising:
a memory configured to store computer programs; and
a processor configured to invoke and execute the computer programs stored in the memory, to perform the method of any of claims 1 to 16, or the method of any of claims 17 to 25, or the method of any of claims 26 to 41, or the method of any of claims 42 to 50.

60. A chip, comprising:
a processor configured to invoke and execute computer programs stored in a memory, to cause a device equipped with the chip to perform the method of any of claims 1 to 16, or the method of any of claims 17 to 25, or the method of any of claims 26 to 41, or the method of any of claims 42 to 50.

61. A computer-readable storage medium configured to store computer programs which are operable with a computer to perform the method of any of claims 1 to 16, or the method of any of claims 17 to 25, or the method of any of claims 26 to 41, or the method of any of claims 42 to 50.

62. A computer program product comprising computer program instructions which are operable with a computer to perform the method of any of claims 1 to 16, or the method of any of claims 17 to 25, or the method of any of claims 26 to 41, or the method of any of claims 42 to 50.

63. A computer program being operable with a computer to perform the method of any of claims 1 to 16, or the method of any one of claims 17 to 25, or the method of any one of claims 26 to 41, or the method of any one of claims 42 to 50.
